Europäisches Patentamt

(19) European Patent Office

Office européen des brevets

(11) **EP 1 105 986 B1**

(12) **EUROPÄISCHE PATENTSCHRIFT**

(45) Veröffentlichungstag und Bekanntmachung des Hinweises auf die Patenterteilung:
**25.05.2005 Patentblatt 2005/21**

(51) Int Cl.⁷: **H04B 11/00**, H04B 13/02

(21) Anmeldenummer: **99953562.8**

(86) Internationale Anmeldenummer:
**PCT/DE1999/002628**

(22) Anmeldetag: **23.08.1999**

(87) Internationale Veröffentlichungsnummer:
**WO 2000/011817 (02.03.2000 Gazette 2000/09)**

(54) **VERFAHREN ZUR ÜBERTRAGUNG VON INFORMATIONEN SOWIE EIN GEEIGNETES SYSTEM HIERFÜR**

METHOD FOR TRANSMITTING INFORMATION AND SUITABLE SYSTEM THEREFOR

PROCEDE PERMETTANT DE TRANSMETTRE DES INFORMATIONS ET SYSTEME ASSOCIE

(84) Benannte Vertragsstaaten:
**AT BE CH CY DE DK ES FI FR GB GR IE IT LI LU MC NL PT SE**

(30) Priorität: **21.08.1998 DE 19838060**
**05.02.1999 DE 19904747**
**07.06.1999 DE 19927040**

(43) Veröffentlichungstag der Anmeldung:
**13.06.2001 Patentblatt 2001/24**

(73) Patentinhaber: **Evologics GmbH**
**10369 Berlin (DE)**

(72) Erfinder:
• **Bannasch, Rudolf**
**13053 Berlin (DE)**
• **Kebkal, Konstantin**
**12683 Berlin (DE)**

(74) Vertreter: **Hertz, Oliver, Dr. et al**
**v. Bezold & Sozien**
**Patentanwälte**
**Akademiestrasse 7**
**80799 München (DE)**

(56) Entgegenhaltungen:
WO-A-99/29058          US-A- 4 020 449
US-A- 5 124 955

**Beschreibung**

Die vorliegende Erfindung betrifft ein Verfahren zur Übertragung von Informationen und ein geeignetes System hierfür.

In vielen Bereichen der Technik werden Wellen zur Informationsübertragung genutzt. Dabei kann es sich beispielsweise um elektromagnetische bzw. akustische Wellen handeln, die sich entweder in einem speziellen Leiter oder frei in einem gegebenen Übertragungsmedium ausbreiten und so vom Sender bzw. Sendeeinheit zum Empfänger bzw. Empfängereinheit gelangen. Sind beide Einheiten beispielsweise auf die entsprechende Frequenz bzw. den zur Informationsübertragung vorgesehenen Frequenzbereich abgestimmt, wird eine Verbindung hergestellt. Über diese Verbindung können auf verschiedene Weise Informationen übertragen werden.

Dazu muß die Ausgangsinformation, die als Sprache, Text, Zahlenreihe, Musik, Bilddaten- oder anderweitige Daten in einer geeigneten Form vorliegen kann, umgewandelt bzw. codiert werden, um dann vom Sender in Gestalt von Wellensignalen in das Übertragungsmedium ausgestrahlt zu werden. Der Empfänger empfängt diese Signale, wandelt sie wieder in die ursprüngliche Form um, d.h. decodiert sie, und gibt die der Ausgangsinformation entsprechende Information aus.

Je nachdem, in welcher Form die Information in den Wellen codiert ist, unterscheidet man zwischen der analogen und der digitalen Informationsübertragung.

Bei der analogen Informationsübertragung werden die zu übertragenden Werte in einem stufenlosen, kontinuierlichen Spektrum von physikalischen Zuständen abgebildet. Das geschieht typischerweise in Form einer Amplituden-, Frequenz- und / oder Phasenmodulation der Trägerwellen. Damit können in einem gegebenen Zeitintervall sehr große Informationsmengen übertragen werden.

Bei der digitalen Informationsübertragung beschränkt man sich dagegen auf bestimmte diskrete Zustände. Hinsichtlich der Übertragungsrate ergeben sich, sofern elektromagnetische Wellen verwendet werden, jedoch in der bisherigen Praxis noch keine Einschränkungen, da die Frequenzen der betreffenden Trägerwellen sehr hoch sind und unterschiedliche digitale Zustände in extrem kurzen Zeitabständen realisiert werden können.

In einigen Übertragungsmedien, wie z.B. Wasser, ist die Informationsübertragung mittels elektromagnetischen Wellen jedoch nur bedingt möglich, da diese nur eine geringe Reichweite haben. Hier bietet sich deshalb die Verwendung von Schallwellen zur Informationsübertragung an, die sich oftmals über wesentlich größere Distanzen fortpflanzen können. Die Schallwellen lassen sich in ähnlicher Weise - wie oben beschrieben - modulieren. Diese Schallwellen sind jedoch mechanische Druck-Wellen, die sich, abgesehen von der erheblich niedrigeren Frequenz, welche sich natürlich auf die übertragbare Informationsrate auswirkt, auch hinsichtlich der generellen Ausbreitung unterscheiden. So hängt z.B. ihre Ausbreitungsgeschwindigkeit stark von den jeweiligen Umgebungsbedingungen ab.

Die vielfältigen Probleme, die bei der akustischen Informationsübertragung auftreten können, seien kurz am Beispiel der Übertragung von Schallsignalen unter Wasser erläutert. Bei der Ausbreitung der von einem Sender abgegebenen Schallwellen im Raum kann ein Teil von ihnen z.B. von der Wasseroberfläche und/oder in Abhängigkeit von der Tiefe vom Grund des Gewässers, von diversen Gegenständen, Luftblasen, Schwebeteilchen und auch von schichtweisen Inhomogenitäten im Wasser reflektiert oder an diesen gebeugt werden. Die diversen Komponenten der Schallwellen treffen dann je nach Lauflänge, Winkelverhältnissen und akustischer Beschaffenheit der entsprechenden Grenzflächen bzw. Medien mit unterschiedlicher Amplitude und Phasenlage beim Empfänger ein. Infolge der Interferenz kann das eigentliche Signal im Empfangspunkt in nicht vorhersehbarer Weise verstärkt, abgeschwächt, verzerrt oder gar ganz ausgelöscht werden bzw. der Empfang kann auch durch das sogenannte Nachhallen gestört werden.

Um die Problematik näher zu erläutern, wird zunächst der einfache Fall betrachtet, wenn nur ein sehr kurzes Signal einer bestimmten Frequenz, ein sogenannter CWP (Continuous Wave Pulse) gesendet wird. Dann kann man in der besagten Situation am Empfänger nicht nur ein einzelnes Signal, sondern eine ganze Gruppe von zeitlich versetzten und unterschiedlich starken Einzelpulsen erhalten. Dieser Effekt wird als "Channel Response" bezeichnet. Während es in diesem Fall noch möglich ist, empfängerseitig die betreffenden Einzelpulse zu unterscheiden und z.B. den jeweils am besten geeigneten Pulse als "eigentliches Signal" auszuwählen (woraufhin die anderen Pulse dann konsequenterweise als "Störsignale" aufgefaßt und ggf. entsprechend behandelt werden können), läßt sich eine derartige Trennung bei der Übermittlung eines längeren Wellenpaketes normalerweise nicht mehr vornehmen, da der Empfänger nur ein summarisches bzw. zusammengesetztes Signal erhält, das zwar immer noch die gleiche Frequenz wie das Ausgangssignal besitzt, in dem aber das eigentliche Signal und die Störsignale mit ihren unterschiedlichen Amplituden und Phasenlagen dergestalt überlagert sind, daß sich unvorhersehbare Schwankungen der Amplitude und auch der Phasenlage ergeben können. Dieser unliebsame Effekt, der die Signalauswertung erschweren oder unter Umständen auch ganz unmöglich machen kann, wird als "Intersymbol-Interaction" bezeichnet. Bewegen sich Sender und Empfänger relativ zueinander, können als zusätzliches Problem noch Frequenzverschiebungen infolge von Doppler-Effekten hinzukommen.

Die Fülle dieser Probleme macht die Unterwasserkommunikation, z.B. mittels Ultraschall zwischen Tauchern und/oder Unterwasserfahrzeugen und auch die Fernsteuerung entsprechender Unterwassergerätschaften sehr schwierig. Bislang erwies sich insbesondere die analoge Informationsübertragung als nur sehr bedingt praktikabel. Sie wurde und wird jedoch häufig noch zur Übertragung von Sprache eingesetzt, wobei man sich zunutze macht, daß der Mensch ihm bekannte Wörter und Sinnzusammenhänge auch noch bei sehr stark verrauschtem Empfang erkennen kann. Durch entsprechende Übung und Vereinbarung eines beschränkten Vokabulars kann die Erkennungsrate etwas verbessert werden. Dieses Verfahren ist jedoch ungeeignet, um z.B. Computerdaten oder andere Informationen maschinell zu übertragen. Deshalb sucht man auch im Bereich der akustischen Informationsübertragung nach geeigneten Digitalverfahren.

Heutige technische Digital-Systeme, speziell für den Unterwassereinsatz, basieren meist auf der sequentiellen Übertragung von Tonsignalen gleichbleibender Höhe, welche in einem mehr oder weniger engen Frequenzband festliegen. Um eine möglichst große Reichweite zu erzielen und auch Informationsverluste durch akustisch blinde Frequenzbereiche auszuschalten, wird bei einigen Anwendungen mit hoher Energie synchron in einem breiten Frequenzband gesendet. Unabhängig davon, ob in einem engen oder breiten Frequenzband die Übertragung erfolgt, gestattet die Codierung mittels serieller "Klicks" nur eine begrenzte Informationsübertragungsrate, was die Übermittlung großer Informationsmengen z.B. bei der Übertragung von Bildern einer Unterwasserkamera etc. erschwert, bzw. bisher noch unmöglich gemacht hat. Neben dem relativ großen Energieaufwand, der, auch eine "akustische Umweltverschmutzung" bedeutet, haben die bislang bekannten, verhältnismäßig "starren" Systeme auch große Probleme mit Doppler-Effekten.

Abgesehen von den übertragungstechnisch bedingten Verzerrungen und Verlusten bestehen ferner auch erhebliche Schwierigkeiten, die in den komplexen Empfangssignalen enthaltenen Informationen so zu verarbeiten, daß die diversen, darin enthaltenen Störungen ausgeblendet bzw. eliminiert und die für die Informationscodierung verwendeten Signalparameter empfängerseitig rekonstruiert werden können. Im Bereich der Datenübertragung liegen momentan jedoch keine Verfahren vor, welchen die Gesamtheit dieser Probleme ausreichend und in optimaler Weise lösen könnten.

Aus US-A-5 124 955 ist ein digitales Unterwasserkommunikationssystem mit einem Sender und einem Empfänger bekannt. Bei diesem System ist vorgesehen, eine Vielzahl von Signalen jeweils mit einer spezifischen Frequenz in Kombinationen zu übertragen, die durch eine Schaltmatrix vorgegeben werden.

Die Aufgabe der vorliegenden Erfindung ist es, ein Verfahren bzw. ein geeingetes System zur Übertragung von Informationen bereitzustellen, welche bzw. welches eine hohe Übertragungsrate über eine große Reichweite ermöglicht.

Ferner wird angestrebt, ein Verfahren bzw. ein System zur Übertragung von Information bereitzustellen, welche bzw. welches robust gegenüber den oben beschriebenen Störungen ist und an unterschiedliche Übertragungsbedingungen anpaßbar ist.

Insbesondere wird angestrebt, ein Verfahren bzw. ein geeignetes System zur Signalbearbeitung bereitzustellen, das in der Lage ist, mit hoher Trennschärfe zum bestmöglichen. Ausschluß von Intersymbol Interactions aus einer Vielzahl der Kanalantworten nach Möglichkeit stets diejenigen Signalkomponenten mit den geringsten Übertragungsverlusten zu isolieren und zu analysieren.

Weiterhin wird angestrebt, ein Verfahren bzw. ein geeignetes System zur Signalbearbeitung bereitzustellen, das im gleichen Kontext auch die möglichst vollständige Kompensation von Doppler-Effekten gewährleistet.

Ferner ist beabsichtigt, durch die bestmögliche Qualität der Signalbearbeitung die Voraussetzung für eine erhebliche Steigerung der Übertragungsrate und ggf. auch Reichweite auch unter komplizierten Übertragungsbedingungen, wie beispielsweise bei der Kommunikation mit bzw. zwischen bewegten Objekten unter Wasser, zu schaffen.

Diese Aufgaben werden verfahrenstechnisch mit den Merkmalen des Anspruchs 1 und vorrichtungstechnisch mit den Merkmalen der Ansprüche 27 oder 38 gelöst.

Es wird insbesondere die Erzeugung eines Informationssignal beschrieben, welches aus mindestens zwei Signalkomponenten besteht, zumindest einer Bezugskomponente (BK), die auf einem Bezugsfrequenzkanal gesendet wird und zumindest einer Informationskomponente (IK) bzw. (I1; I2; ...; IN), die auf einem Informationsfrequenzkanal übertragen wird, so daß mehrere Frequenzkanäle bzw. Komponenten zur Verfügung stehen. Durch deren gleichzeitige Verwendung können mehr Informationseinheiten pro Zeiteinheit übetmittelt werden. Ferner stellen sowohl der Bezugsfrequenzkanal bzw. die Bezugskomponente als auch der Informationsfrequenzkanal bzw. die Informationskomponente diskrete Zustände zur Verfügung, welche ein Bitmuster ausbilden. Als wesentlicher Unterschied z.B. zur bisherigen Radiotechnik wird beim anmeldungsgemäßen Verfahren keine hochfrequente Trägerwelle verwendet, auf die niederfrequente Wellen aufmoduliert werden. Das erzeugte Informationssignal, welches hier für die Übertragung von Informationen herangezogen wird, stellt eine Welle dar, die aus der Überlagerung sowohl des Bezugsfrequenzkanals als auch des zumindest einen Informationsfrequenzkanals besteht.

Zur Bereitstellung des Bitmusters im einfachsten Fall können die Frequenzen bzw. Töne der Informationsfrequenzkanäle ein- bzw. ausgeschaltet werden, wobei das Vorhandensein oder Nichtvorhandensein der betreffenden Signalfrequenzkomponenten als binäre digitale Information (ON/OFF), d.h. 1 oder 0, gewertet wird. Auf diese Weise kann somit auf jedem dieser Informationsfrequenzkanäle ein Bit übertragen werden. Die Signalkomponenten ergeben zusammen ein Bitmuster, in dem die Information auf beliebiger Weise verschlüsselt werden kann.

Während dieser einfachste Fall praktisch alle Parameter des betreffenden Informationssignals betrifft, können in den ON-Zuständen aber auch verschiedene Signalparameter so variiert werden, daß zusätzlich weitere digitale Zustände unterschieden werden können.

Weitere vorteilhafte Ausführungsformen sind Gegenstand der Unteransprüche.

Vorteilhafterweise wird eine zeitliche Folge von Bitmustern erzeugt.

Es kann vorgesehen sein, dass die Frequenzkanäle eine harmonische Reihe bilden.

Wird der Bezugsfrequenzkanal als Grundton bzw. Grundwelle und zumindest einer der Infonnationsfrequenzkanäle als harmonischer Oberton bzw. Oberwelle zu dem Grundton oder aber auch alle Informationsfrequenzkanäle als harmonische Obertöne zu dem Grundton ausgebildet, so bilden die einzelnen Frequenzen bzw. Töne oder Signalkomponenten eine harmonische Reihe und somit ein Konsonanzsystem. Eine Besonderheit dieses anmeldungsgemäßen Systems besteht darin, daß der Grundton mit der niedrigsten Frequenz, der die größte Reichweite hat, permanent während der Informationsübertragung gesendet werden kann und somit quasi eine ständige Brücke zwischen Sendeeinheit und Empfängereinheit bildet. Der als Grundton ausgebildete Bezugsfrequenzkanal dient in diesem Fall nicht der eigentlichen Informationsübermittlung sondern als ständiger Bezug zur Abstimmung der übrigen Informationsfrequenzkanäle und gegebenenfalls wie später noch dargestellt wird zur Bestimmung der relativen Phasenlagen sowie als Energiespender im Fall der Nutzung von nicht linearen Effekten zur Erhöhung der Reichweite des gesamten Frequenzsystems. An dieser Stelle sei aber grundsätzlich darauf hingewiesen, daß anstelle des tiefen Tones auch ein beliebiger anderer Ton eines vorgegebenen Frequenzspektrums als Bezugston oder Grundton verwendet werden kann, falls dieses bei bestimmten Umwelteinflüssen oder für eine gegebene Anwendung vorteilhafter ist.

Durch die Festlegung, daß die Informationsfrequenzkanäle stets einen definierten Abstand zum Bezugsfrequenzkanal haben, wird gewährleistet, daß die Empfängereinheit, der die entsprechenden Abstände bzw. Proportionalitätsfaktoren bekannt sind, lediglich den als Grundton ausgebildeten Bezugsfrequenzkanal aufzuspüren braucht, um im Bezug darauf alle anderen aktiven Informationsfrequenzkanäle zu erkennen und ständig operativ abstimmen zu können. Dieser Abstimmprozeß läßt sich dahingehend automatisieren, daß das System ohne großen Zusatzaufwand an die unterschiedlichsten Übertragungsbedingungen angepaßt werden kann. Die automatische Erkennung des Grundtons und dementsprechende selbstadaptive Abstimmungen der Informationskanäle seitens der Empfängereinheit bedeutet insbesondere bei der Kommunikation mit oder zwischen bewegten Objekten einen enormen Vorteil, da damit die bei den herkömmlichen Verfahren durch beispielsweise DopplerEffekte verursachten Probleme entfallen, wenn beispielsweise ein harmonisches Frequenzkanalsystem genutzt wird.

Ändert sich die Frequenz des Bezugsfrequenzkanals während der Übertragung zeitlich, so ergibt sich auf dieser Basis nunmehr das beim adaptiven System nicht nur empfängerseitig eine ständige Nachjustierung zur Kompensation von naturbedingten Frequenzverschiebungen (DopplerEffekten etc.) durchgeführt werden kann. Vielmehr kann nunmehr auch seitens der Sendeeinheit ganz bewußt eine geregelte zeitliche Veränderung des Frequenzspektrums erzeugt werden, ohne die Verbindung zum Empfänger zu gefährden.

Da die zeitliche Änderung der Frequenz des Bezugsfrequenzkanals kontinuierlich erfolgt, können ein bzw. mehrere Frequenzgradienten zur Verfügung gestellt werden. Dieser Vorgang wird im folgenden als Frequenz-Gradienten-Methode (FGM) bezeichnet. Mit dieser Methode wird erreicht, daß beispielsweise Reflektionen bzw. Störsignale eliminiert werden. Die Variation der Bezugs- bzw. Informationskomponenten anhand der FGM wird im weiteren auch als VMT (Variable Mehrkanalige Transmission) bezeichnet.

Erfolgt die Variation der Komponenten stets proportional zueinander, wird von einer pFGM bzw. pVMT ausgegangen, wohingegen bei einer Variation der Komponenten, welche parallel erfolgt, von einer paFGM bzw. paVMT ausgegangen wird.

Durch die Verwendung der FGM wird eine wesentlich schärfere und zuverlässigere Signalanalyse als bei den herkömmlichen Techniken, insbesondere solchen mit feststehenden Frequenzkanälen, ermöglicht. Da sich in diesem Fall die Arbeitsfrequenzen der Informationsfrequenzkanäle ständig ändern, haben alle Signalkomponenten, die auf unterschiedlichen Übertragungswegen zu einem gegebenen Zeitpunkt bei der Empfängereinheit eintreffen, nunmehr auch unterschiedliche Frequenzen. Aufgrund dieser Frequenzunterschiede können die eigentlichen Informätionsfrequenzkanäle von gegebenenfalls vorliegenden Störkomponenten getrennt werden, d.h. die Intersymbol-Interactions können weitestgehend, wenn nicht sogar völlig eliminiert werden, wodurch somit empfängerseitig ein wesentlich eindeutigeres Abbild des von der Sendeeinheit ausgestrahlten Informationssignal rekonstruiert werden kann.

Da bei der FGM die Frequenz des Bezugsfrequenzkanals und synchron dazu im gegebenen Verhältnis auch die Informationfrequenzkanäle in nahezu beliebiger Weise variiert werden können, ist sowohl das anmeldungsgemäße Verfahren als auch das anmeldungsgemäße System außerordentlich flexibel. Durch die bewußt herbeigeführten Frequenzdriften lassen sich gegenseitige Überlagerungen von mehreren Übertragungssystemen vermeiden und das ggf. unerwünschte Abhören wird erschwert.

Werden ferner neben der Frequenz des Bezugsfrequenzkanals und des Informationsfrequenzkanals auch andere Signalparameter zur Erzeugung eines Bitmusters herangezogen, so kann die Codierung auf einfache Weise komplexer gemacht und die Informationsrate entsprechend erhöht werden.

Wird das Informationssignal amplitudenmoduliert, so können bei den Schwingungsknoten der zur Modulation herangezogenen Amplitude Zeitpunkte festgelegt werden, an denen sich beispielsweise die einzelne Informationsfrequenzkanäle ändern können, ohne die als sogenanntes "Glitching" bezeichnete Störung in dem Informationssignal hervorzurufen. Dadurch kann die Übertragungsqualität weiter verbessert werden.

Werden die Bitmuster in einem gegebenen Zeittakt erzeugt, so können sie auch empfängerseitig auf einfache Weise entschlüsselt werden, womit sich die Übertragungsgenauigkeit erhöht.

Wird das Bitmuster innerhalb eines Zeittaktes verändert, so kann insbesondere ein erster Teil innerhalb des Zeittaktes dafür verwendet werden, zu erkennen, welche Informationsfrequenzkanäle für die Übertragung der Information grundsätzlich verwendet werden, und beispielsweise der restliche Teil für die Erzeugung des Bitmusters selbst. Außerdem stellt in diesem Fall der erste Teil zusätzlich zum Bezugsfrequenzkanal eine weitere Referenz zur Verfügung, mit deren Hilfe die Parameter der im zweiten Taktabschnitt übermittelten Signalkompönenten mit sehr großer Präzision bestimmt werden können. Auf diese Weise wird die Übertragungssicherheit erhöht.

Vorteilhafterweise besteht die Möglichkeit, die Übertragung an unterschiedliche Übertragungsumgebungen und Nutzeransprüche anzupassen.

Mit der Maßnahme des Anspruchs 9 wird erreicht, daß die Übertragungsrate erhöht werden kann.

Aufgrund der insbesondere durch Anwendung der FGM erreichbaren hohen Empfangsqualität kann in Kombination mit dem bereits beschriebenen Ein- und Ausschalten der einzelnen Signalkomponenten oder anstatt dessen die Information auch in feineren Variationen bestimmter Signalparameter oder Parameterkombinationen verschlüsselt werden. Da in den empfangenen Signalen neben den Frequenzen nunmehr auch die Amplituden und Phasenwinkel der Signalkomonenten einen stärker definierten Bezug zum ursprünglich generierten Signal haben, können praktisch alle Parameter in die Codierung eingezogen werden. Dieses kann z.B. durch stufenförmige Veränderungen geschehen.

Dabei besteht ein wesentlicher Vorteil des Verfahrens darin, daß für die Codierung signalinteme Bezüge in dem gegebenen Frequenzsystem genutzt werden können. Durch diese Relativierung wird erreicht, daß die Bitmuster bzw. Symbole bereits anhand von ein oder zwei empfangenen Takten identifiziert werden können, ohne daß eine zusätzliche Referenz zu einer externen Bezugsgröße erforderlich ist.

So können beispielsweise die Phasenwinkel in Form der jeweils im gegebenen Zeittakt aktuellen Relation zwischen der jeweiligen Informationskomponente und BK festgelegt werden. Diese Codierungsmethode sei als Relative Phasen-Winkel-Methode, abgekürzt RPWM, bezeichnet. In dieser Methode spielt die Vorgeschichte keine Rolle mehr, die äußere Zeit verliert ihre Bedeutung für die Signalauswertung. An ihre Stelle tritt die relative, systeminteme Zeit, die z.B. anhand der momentanen Zykluszeit etwa der BK abgelesen werden kann, die - von außen betrachtet - von der jeweils aktuellen Frequenz abhängt. Die relativen Phasenwinkel lassen sich auf einfache Weise bestimmen, wenn beispielsweise im Auswerteprozeß alle Signalkomponenten, d.h. Informationsfrequenzkanäle und Bezugsfrequenzkanal zunächst auf eine einheitliche Periodendauer normiert werden. Damit soll jedoch nur das Prinzip verdeutlicht werden. Aus der Signalverarbeitung ist eine breite Palette von Projektions- und Transformationsverfahren bekannt, die zur Bestimmung der relativen Phasenwinkel herangezogen werden können. Damit hat der Anwender einen großen Spielraum für die praktische Umsetzung. Für das anmeldungsgemäße Verfahren ist jedoch wesentlich, daß im Ergebnis der FGM und insbesondere der pFGM eine Reihe von Störeffekten eliminiert werden können, so daß sich auch die relativen Phasenwinkel mit größerer Präzision ermitteln lassen, was für eine feinere Diskretisierung, also der Unterscheidung von mehr Digitalzuständen und damit für eine weitere Steigerung der Informationsrate genutzt werden kann.

Eine weitere Variante besteht beispielsweise darin, daß die Information nicht direkt in dem Phasenwinkel der jeweiligen Komponente bezüglich des BK oder GT als sogenannte vertikale signalinteme Referenz, sondern in der Differenz zwischen diesem und dem im letzten zuvor ermittelten relativen Phasenwinkel derselben Komponente als sogenannte horizontale signalinterne Referenz verschlüsselt wird. Diese Methode sei als Relative Phasen-Differenz-Methode, abgekürzt RPDM bezeichnet. Bei der RPDM dient der jeweils erste Takt einer in sich geschlossenen Übertragungssequenz ausschließlich als horizontale Referenz. Unter sehr komplizierten Übertragungsbedingungen kann es aber auch vorteilhaft sein, die RPDM in Verbindung mit dem Verfahren nach Anspruch 9 einzusetzen. Hingegen kann es bei sehr günstigen Übertragungsbedingungen auch ausreichend sein, ausschließlich die horizontale sinalinterne Referenz zur Bestimmung der relativen Phasenwinkel zu nutzen. In diesem Fall ist kann der Bezugsfrequenzkanal ebenfalls zur Informationscodierung genutzt werden. Weiterhin sei vermerkt, daß sowohl bei der RPWM als auch bei der RPDM das Nichtvorhandensein einer Signalkomponente bzw. das Unterschreiten eines bestimmten Amplitudenschwellwertes einen zusätzlichen Digitalzustand verkörpern kann.

Wird die Anzahl der Informationskanäle in Abhängigkeit des Übertragungsweges geändert, so wird erreicht, daß insbesondere bei Verringerung des Abstands zwischen Sendeeinheit und Empfangereinheit zusätzliche, typischerweise höhere oder zwischen den bisherigen Kanälen liegende, z.B. auch andere konsonante Frequenzen genutzt werden, wohingegen andererseits bei sehr großen Abständen hauptsächlich niedrigere Frequenzbereiche genutzt werden. Mit dieser Maßnahme wird eine optimale Ausnutzung der Ausbreitungscharakteristik der Wellensignale erreicht, was insbesondere bei der Verwendung von Schallsignalen von großer Bedeutung ist. Auf diese Weise können z.B. im Unterwasserbereich jeweils maximale Bitraten und / oder bislang schwer erreichbare Übertragungsstrecken bereitgestellt werden. Selbstverständlich schließt diese Flexibilität ein, daß die auf spezifische Übertragungsbedingungen abgestimmten Einstellungen auch zum Grundstandard erklärt werden können, falls damit ein gegebenes Arbeitsregime gut abgedeckt werden kann.

Neben den oben genannten konkreten Zuständen bzw. Proportionen der Signalparameter kann in dem gegebenen Verfahren die Information aber auch in deren momentaner zeitlicher Veränderung, d.h. in der dynamischen Charakteristik verschlüsselt werden.

Werden die einzelnen Informationsfrequenzkanäle breiter bzw. breitbandig ausgelegt, ohne sich jedoch zu überlappen, so wird die Möglichkeit geschaffen, eine kontinuierliche Phasenverschiebung der betreffenden Signalkomponenten zu erzeugen und diese beispielsweise für die Informationskodierung zu nutzen. Diese Maßnahme sei als Phasen-Gradienten-Methode oder Phasen-Geschwindigkeits-Methode PGM bezeichnet. Die Abstände zum Bezugston beziehen sich dann typischerweise auf die Kennlinien der Mittelwerte der entsprechenden Kanäle. Während der Informationsübertragung können nunmehr in jedem Zeittakt die Frequenzen der einzelnen Informationsfrequenzkanäle innerhalb eines gegebenen Kanals geringfügig - typischerweise um weniger als 0,5 % des jeweils aktuellen Sollwertes - verschoben oder kontinuierlich verändert werden, wodurch eine kontinuierliche gleichförmige bzw. beschleunigte Phasenverschiebung des jeweiligen Informationsfrequenzkanals gegenüber dem Grundton bzw. Bezugsfrequenzkanals bewirkt wird. Die Empfängereinheit erkennt nicht nur, ob in einem gegebenen Zeittakt eine Frequenz auf dem entsprechenden Kanal gesendet wurde, sondern bestimmt - falls eine Frequenz vorliegt - auch die relativen Phasenwinkel und / oder charakteristische Parameter, die deren Funktion etwa in Abhängigkeit von der jeweils aktuellen Zykluszeit des Grundtones bzw. Bezugsfrequenzkanals beschreiben. Somit können neben den eigentlichen Zustands- bzw. Proportionswerten auch deren zeitliche Veränderungen für die Codierung verwendet werden. Daraus ergeben sich vielfältige Variations- und Kombinationsmöglichkeiten, die zur Steigerung der Informations-Übertragungsrate, für eine größere Adaptivität des Übertragungssystems an unterschiedliche Einsatzbedingungen, bzw. auch für eine Optimierung der Vorrichtungen und ihrer Kosten genutzt werden können.

Zur vereinfachten Behandlung bzw. Verarbeitung des Informationssignals wird nach Empfang die Bezugskomponente von der zumindest einen Informationskomponente gemäß Anspruch 14 getrennt.

Gemäß Anspruch 15 wird durch die paarweise Bearbeitung der jeweiligen informationstragenden Signalkomponente mit der einen, bzw. der jeweils am besten geeigneten Bezugs- bzw. Referenzkomponente eine Kompensation von Doppler- Effekten erreicht. Als Nebenergebnis kann dieser Bearbeitungsschritt helfen, eine Frequenzstabilisierung vorzubereiten. Im Fall der paFGM kann dieser Schritt direkt zur Bildung stabiler, d.h. stehender Zwischenfrequenzen führen.

Die Weiterbildung gemäß Anspruch 16, gewährleistet die Überführung der Signalkomponenten in stehende Zwischenfrequenzen (Z'1; Z'2; ...; Z'N+X), die sich dann vorteilhaft weiter bearbeiten lassen. Einer dieser Vorteile besteht beispielsweise darin, daß die stehenden Zwischenfrequenzen (Z'1; Z'2; ...; Z'N+X) in einem für die nachfolgende Filterstufe gemäß Anspruch 20 optimalen Frequenzfenster plaziert werden können, das gleichzeitig auch den Einsatz besonders scharfer Filter ermöglicht.

Bei der Verwendung einer pFGM bzw. pVMT besteht als Alternative zu der Vorgehensweise gemäß den Ansprüche 13 bis 15 auch die Möglichkeit, ohne vorherige Trennung der Signalkomponenten und ohne den Einsatz von Hetrodynefrquenzen beispielsweise nur duch Multiplikation des im aktuellen Zeittakt empfangenen Signals mit dem Empfangssignal des vorangegangenen Taktes stehende Zwischenfrequenzen zu erzeugen. Die Variante der Signalbearbeitung gemäß Anspruch 16 bietet sich vorzugsweise in Verbindung mit dem Einsatz einer differentiellen Phasencodierung an.

Die Weiterbildung gemäß Anspruch 19 hat zur Aufgabe, aus den nunmehr frequenzstabilen Spektren der diversen Kanalantworten, für jede Signalkomponente den jeweils am besten geeigneten Signalanteil zu isolieren, beispielsweise herauszufiltern und dabei mögliche Störeinflüsse der übrigen Signalanteile zu minimieren. Letzteres schließt ein, daß in diesem Zuge auch die Signalkomponenten voneinander getrennt werden können, falls dieses nicht oder noch nicht vollständig gemäß Anspruch 13 erfolgt ist.

Für diesen Zweck können im einfachsten Fall spezielle Filter zur Anwendung kommen. Damit können u.a. die jeweils nicht benötigten, d.h. gerade nicht zur Auswertung anstehenden Komponenten ausgeblendet, d.h. jeweils weggefiltert werden. Im Ergebnis erhält man für jede der informationstragenden Signalkomponenten einen klar definierten Repräsentanten anhand dessen sich die für die Informationscodierung verwendeten Signalparameter (etwa die Amplitude und / oder die Phasenlage) auf bestmögliche Weise rekonstruieren lassen. Auch hierbei handelt es sich lediglich um eine Darstellung des Grundprinzips. Selbstverständlich können aus dem allgemein bekannten, vielschichtigen Pepertoire der Signalbearbeitung auch komplexere Methoden eingesetzt werden, welche beispielsweise neben der Identifikation der Signalanteile auch die dazugehörigen Parameter liefern.

Mit der Weiterbildung gemäß Anspruch 20 wird der Vorteil erreicht, daß für die jeweils aktuellen Übertragungsbedingungen stets diejenigen Signalanteile bzw. Kanalantworten identifiziert werden können, anhand derer die Signalparameter auf optimale, d.h. auf bestmögliche Weise bestimmt werden können. In der Regel sind dies die stärksten, d.h. energiereichsten Signalanteile, die auch die bestmögliche Qualität der Signalauswertung ermöglichen. Mittels des Kanal-Tunings können beispielsweise die bestmöglichen Filtereinstellungen ermittelt werden, um möglichst exakt die gewünschten Komponenten herauszufiltern und die Störeinflüsse der anderen Kanalantworten sowie eventueller Seitenbänder optimal zu unterdrücken. Letzteres kann u.a. zu einem vergrößerten Empfangsradius und/oder auch zur Erhöhung der Informationsrate beitragen. Je besser und sicherer die Empfangssignale ausgewertet werden können, desto mehr Möglichkeiten stehen auch zur Verfügung, feinere Abstufungen oder auch unterschiedliche Kombinationen von Parametervariationen für die Informationscodierung zu verwenden.

Durch fortlaufende Aktualisierung der Filtereinstellungen bzw. der fortlaufenden Identifikation der jeweils günstigsten Empfangskomponenten gemäß Anspruch 20 können optimale Empfangsergebnisse beispielsweise auch unter sich rasch ändernden Übertragungsbedingungen erreicht werden, wobei ein Vorteil des genannten Verfahrens darin besteht, daß für das Kanal- Tuning keine Unterbrechung der eigentlichen Informationsübertragung erforderlich ist.

Gemäß Anspruch 22 wird der Vorteil erreicht, daß die Dopplerkompensation optimiert wird.

Das Verfahren gemäß Anspruch 24, ist vorzugsweise für die Verarbeitung von Empfangssignalen mit starker Doppler-Belastung anzuwenden, bei welche jede Signalkomponente im wesentlichen nur durch eine Kanalantwort repräsentiert ist.

Weitere vorteilhafte Ausführungsformen der vorliegenden Erfindung sind Gegenstand der übrigen Unteransprüche.

Unter Bezugnahme auf die Figuren sollen unterschiedliche Ausführungsformen des anmeldungsgemäßen Gegenstandes detaillierter beschrieben werden.

Fig. 1 zeigt den Aufbau eines bei dem anmeldungsgemäßen Verfahren und System verwendbaren Informationssignals bestehend aus einem Bezugsfrequenzkanal und drei Informationsfrequenzkanälen;

Fig. 2a zeigt ein einer Amplitudenmodulation unterworfenes Informationssignal von Fig. 1;

Fig. 2b zeigt eine Folge von getakteten informationssignalen;

Fig. 3 zeigt eine schematische Darstellung zur Kodierung einer Information;

Fig. 4 zeigt die Kodierung von Fig. 3 lediglich mit paralleler FGM;

Fig. 5 zeigt die Signalanalyse zum Zeitpunkt ti einer vorauseilenden und nachfolgenden Störkomponente mittels der proportionalen FGM bezüglich drei im harmonischen Verhältnis zueinander stehenden Informationsfrequenzkanälen;

Fig. 6 zeigt das Grundprinzip zur Verbesserung der Signalanalyse hinsichtlich der Störsignalen entsprechend Fig. 5 unter der Verwendung eines Bezugsfrequenzsignals und vier Informationsfrequenzkanälen;

Fig. 7 zeigt eine schematische Darstellung der Anwendung einer gestuften Frequenzverschiebung mit zusätzlicher Änderungen der Informationsfrequenzkanäle innerhalb des Zeittakts; wobei jeweils die erste Takthälfte die zusätzliche horizontale Referenz für die RPDM bildet (kein Gegenstand der beanspruchten Erfindung);

Fig. 8a zeigt eine schematische Darstellung der Kodierung jedoch nur mit zwei Frequenzstufen (kein Gegenstand der beanspruchten Erfindung);

Fig: 8b zeigt als Beispiel das Prinzip einer pentären Kodierung eines Informationsfrequenzkanals;

Fig. 9a und 9b zeigen zwei unterschiedliche mittels der pPGM erzeugten Phasengradienten;

Fig.10 zeigt verschiedene Phasengradienten, welche mittels. der nPGM (oben) und der pPGM (unten) erzeugt werden können.

Fig. 11 zeigt einen Grundaufbau einer Sendeeinheit des anmeldungsgemäßen Systems;

Fig. 12 zeigt einen weiteren Grundaufbau einer Sendeeinheit mit Amplitudenmodulation des anmeldungsgemäßen Systems;

Fig. 13 zeigt einen schematischen Grundaufbau einer Empfangseinheit des anmeldungsgemäßen Systems gemäß einer ersten Ausführungsform;

Fig. 14 zeigt einen weiteren Grundaufbau der Empfängereinheit mit zusätzlicher Phasendetektion gemäß einer zweiten Ausführungsform.

Fig. 15 zeigt die Signalanalyse zum Zeitpunkt ti einer vorauseilenden und nachfolgenden Störkomponente mittels der parallelen FGM bezüglich drei im harmonischen Verhältnis zueinander stehenden Informationsfrequenzkanälen;

Fig. 16 zeigt einige schematisierte Beispiele für günstige Frequenzabstände bei verschiedenen Anwendungen.

Fig. 17 zeigt schematisch eine Grundvariante für den Ablauf des anmeldungsgemäßen Verfahrens zur Signalverarbeitung.

Fig. 18 zeigt ein Beispiel für die zeitliche Änderung der Frequenzanteile eines pVMT-Empfangssignals, bestehend aus einer Bezugs- und drei Informationskomponenten bei nahezu idealen Übertragungsbedingungen (minimale Intersymbol Interactions).

Fig. 19 zeigt das Empfangssignal gemäß Fig. 18 nach Überführung der ersten informationstragenden Signalkomponente in eine Zwischenfrequenz.

Fig. 20 zeigt für ein Beispiel, daß infolge wechselnder Kanalantworten die Stärke der diversen Spektralanteile einer gegebenen Empfangskomponente erhebliche zeitliche Fluktuationen aufweisen kann.

Fig. 21 zeigt das bereits in Fig. 20 dargestellte Beispiel, nach dem Passieren der scharfen Filterstufe.

Fig. 22 zeigt schematisch den Ablauf einer Grundvariante des anmeldungsgemäßen Verfahrens, für welche ein Kanal- Tuning durchgeführt wird.

Fig. 23 zeigt eine schematisierte Übersicht über die wichtigsten Bearbeitungsschritte bei verschiedenen vorteilhaften Ausführungsformen des Verfahrens zur Signalverarbeitung.

Fig. 24 zeigt einen Grundaufbau eines anmeldungsgemäßen Systems zur Signalverarbeitung einer dritten Ausführungsform.

Fig. 25 zeigt einen Grundaufbau eines anmeldungsgemäßen Systems für das Kanal- Tuning.

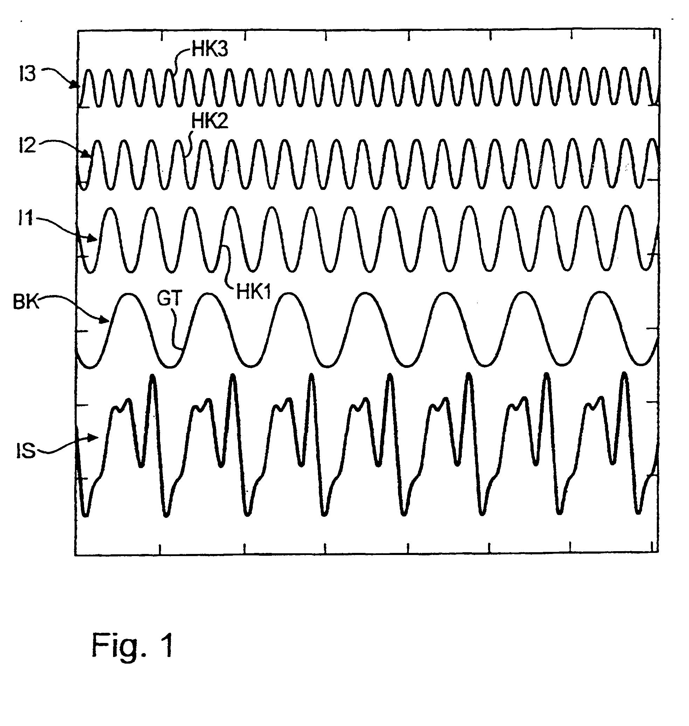

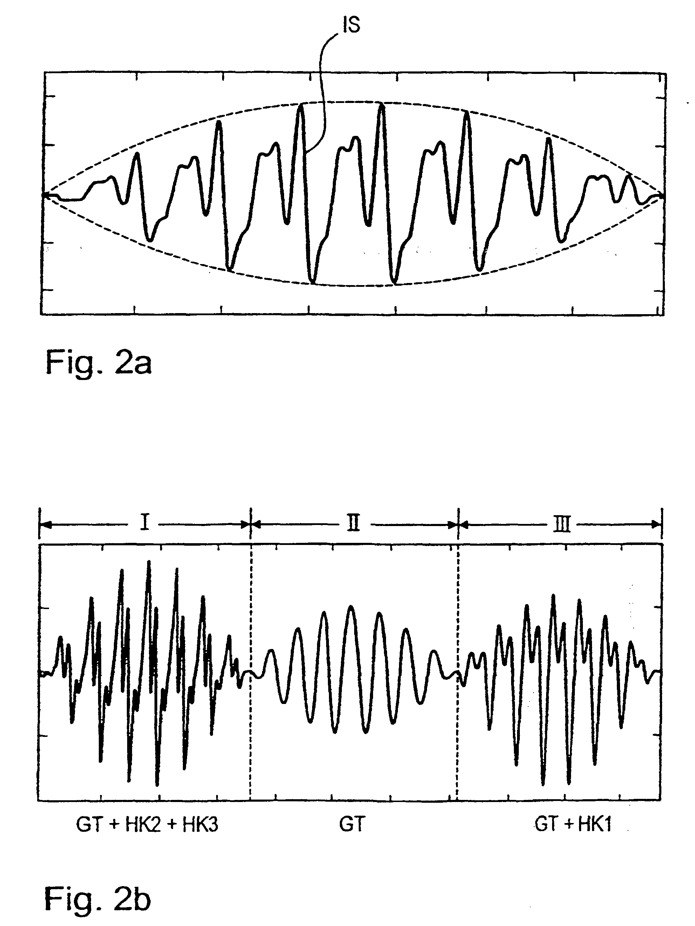

In Fig. 1 wird dargestellt wie das Informationssignal IS beispielsweise aus einem als Bezugskomponente ausgebildeten Bezugsfrequenzkanal BK, welcher in diesem Fall auch als Grundton GT ausgebildet ist, und beispielsweise drei als Informationskomponenten ausgebildete Informationsfrequenzkanäle, I1, I2, I3 zusammengesetzt wird. Die in Fig. 1 dargestellten Informationsfrequenzkanäle sind harmonische Obertöne HK1, HK2 und HK3 zum Grundton GT, welche durch Überlagerung das Informationssignal bilden. Aus dieser Figur ist zu entnehmen, daß jeder der Informationsfrequenzkanäle durch Vorhandensein oder Nichtvorhandensein eine binäre digitale Information, was gleichbedeutend mit 1 oder 0 ist, bereitstellen kann (vgl. auch Fig. 2b).

In Fig. 2a ist eine Amplitudenmodulation des Informationssignals IS aus Fig. 1 dargestellt, um beispielsweise zu Beginn und am Ende eines Taktes einen stetigen bzw. fließenden Übergang zu gewährleisten, wenn sich das Informationssignal durch zeitliche Änderung der Informationsfrequenzkanäle ändert.

Eine derartige Änderung ist beispielsweise in Fig. 2b gezeigt, wobei sich die Form des Informationssignals von Takt zu Takt ändert, so daß beispielsweise in dem Bereich I ein Informationssignal IS vorliegt, welches aus der Überlagerung des Grundtons und des zweiten und dritten harmonischen Obertons (GT+HK2+HK3) besteht, welches beim nächsten Takt (Bereich II) stetig durch Nichtvorhandensein der zweiten und dritten harmonischen Obertöne lediglich in den Grundton (GT) übergeht, um dann beim nächsten Takt durch Überlagerung des ersten harmonischen Obertons mit dem Grundton ein verändertes Informationssignal, welches einem anderen codierten Bitmuster entspricht, aufzuzeigen (siehe Bereich III). Auf diese Weise kann auf jedem dieser Informationskanäle somit ein Bit pro Zeittakt übertragen werden. Insgesamt ergibt sich daraus für jeden Zeittakt ein Bitmuster, in dem die Information auf beliebige Weise verschlüsselt werden kann. Generell kann somit je nach Anzahl der zur Verfügung stehenden Informationskanäle und in Abhängigkeit von dem verwendeten Codierungssystem zum Beispiel ein Buchstabe oder anderweitige Symbole verschlüsselt werden.

An dieser Stelle sei darauf hingewiesen, daß sich bei Verwendung von 2, 4, 8, 12, 16 und weiteren Informationskanälen eine direkte Kompatibilität zu verschiedenen gängigen Verfahren der elektronischen Datenverarbeitung ergibt.

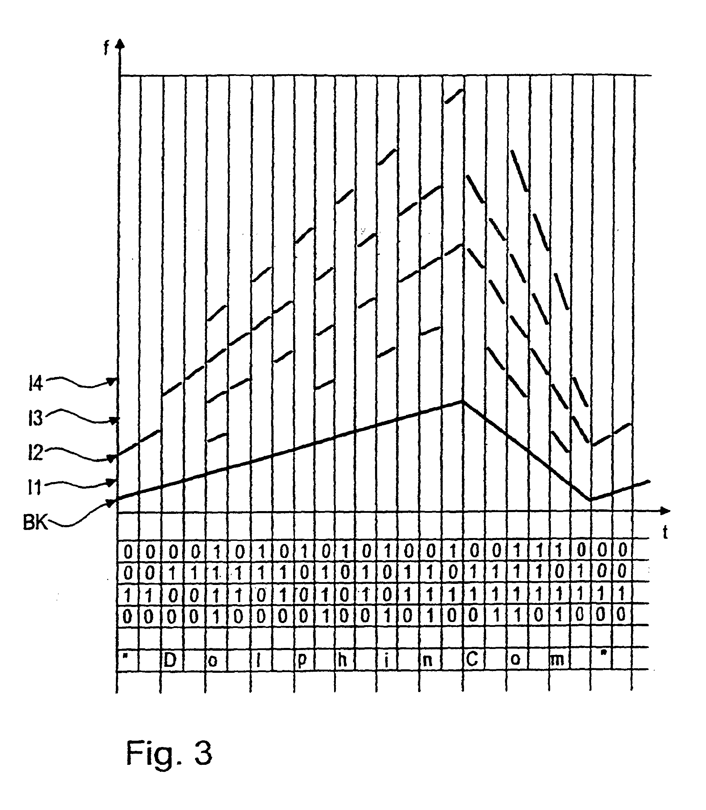

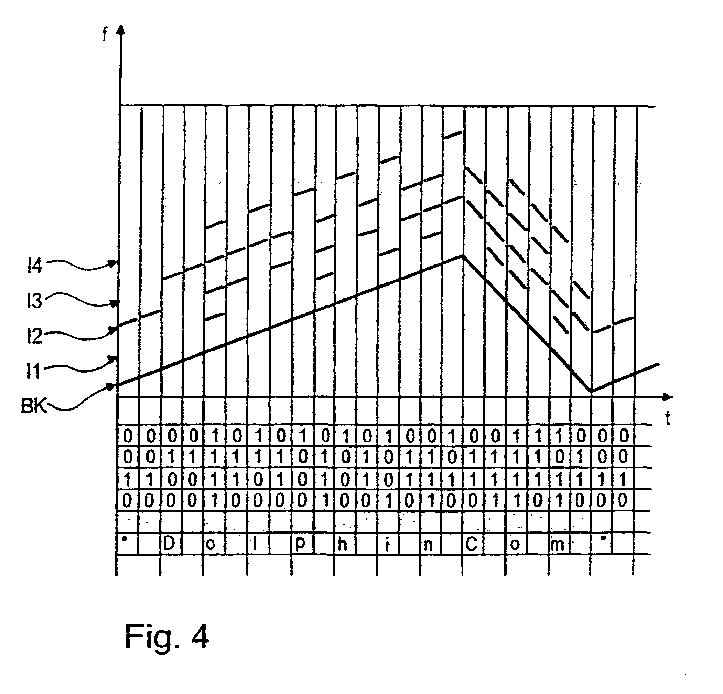

In Fig. 3 ist gezeigt, wie beispielsweise das Wort "DolphinCom" im allgemeinen bekannten ASCII-Code bei Verwendung von vier Informationskanälen übertragen werden kann. Das das Informationssignal bildende Frequenzsystem besteht in diesem Anschauungsbeispiel aus einem als Grundton GT verwendeten Bezugsfrequenzkanal und vier darauf aufbauende harmonische Informationsfrequenzkanäle (I1, I2, I3 und I4) als Obertöne, die mittels der proportionaler FGM zeitlich variiert werden. Die Codierung erfolgt in diesem Beispiel nur durch Ein- bzw. Ausschalten der Obertöne. Die senkrechten Linien zeigen die Takte, die hier immer die gleiche Länge haben. Für jeden Takt ergibt sich ein spezielles Bitmuster, das als Symbol bezeichnet wird. Jeweils 2 Symbole ergeben zusammen einen Buchstaben im ASCII-Code. Dargestellt wurde das Wort "DolphinCom". Grundsätzlich kann für die Verschlüsselung der zu übertragenden Information aber auch jeder beliebige andere Code verwendet werden, was dem Benutzer einen maximalen Spielraum für eigene Programmierungen ermöglicht und das Verfahren zu nahezu allen Systemen der EDV kompatibel macht. Wie in Fig. 3 gezeigt ist, ändert sich der Bezugsfrequenzkanal kontinuierlich, wobei sich die Frequenzen der vier Informationsfrequenzkanäle (I1, I2, I3 und I4) sich proportional verschieben. Demgegenüber zeigt Fig. 4 ebenfalls das Wort "DolphinCom" im ASCII-Code bei Verwendung von vier Informationskanälen übertragen werden kann, wobei sich wie in Fig. 4 der Bezugsfrequenzkanal kontinuierlich ändert, allerdings werden die beispielsweise zu dem Bezugsfrequenzkanal zunächst harmonisch angeordneten Informationsfrequenzkanälen stetig parallel mit der Änderung des Bezugsfrequenzkanals verschoben.

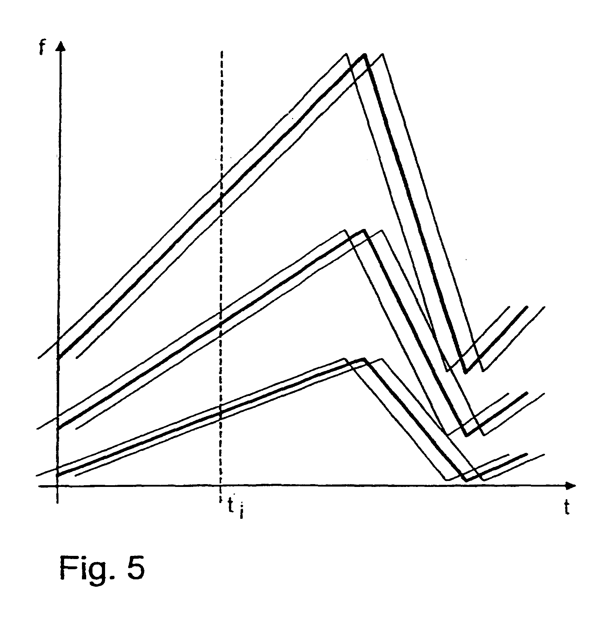

In Fig. 5 ist dargestellt, wie eine wesentlich schärfere und zuverlässigere Signalanalyse durchgeführt werden kann, wenn beispielsweise der Bezugsfrequenzkanal sich im Sinne der FGM kontinuierlich verändert. In dem in Fig. 5 dargestellten Beispiel wurden in der Anlehnung an Fig. 3 exemplarisch drei Informationsfrequenzkanäle ausgewählt, auf denen neben der eigentlichen Signalfrequenz jeweils eine vorauseilende und eine nachfolgende Frequenz als Störsignale beim Empfänger eintreffen, wobei der jeweilige Zeitversatz für alle drei Informationsfrequenzkanäle identisch gewählt wurde. Zur Verdeutlichung des grundlegenden Prinzips wurde auf das Einzeichnen der Takte verzichtet. Die vertikale Schnittlinie (ausgehend von ti) veranschaulicht, daß sich in einem gegebenen Zeitpunkt ti alle empfangenen Informationsfrequenzen voneinander unterscheiden. Allerdings ist von besonderer Bedeutung, daß anhand dieser Frequenzunterschiede nunmehr die eigentlichen Signalfrequenzen von den Störfrequenzen getrennt bzw. die IntersymbolInteractions weitestgehend wenn nicht sogar völlig eliminiert werden können. Wichtig ist in diesem Zusammenhang, daß die Amplituden und Phasenlagen der empfangenen und solchermaßen "bereinigten" Signalkomponenten einen klaren Bezug zu dem Bezugsfrequenzkanal haben. Bei Anwendung der FGM können zur Trennung der eigentlichen Signalfrequenzen von den jeweiligen Störfrequenzen spezielle Frequenzfilter eingesetzt werden. Aus Fig. 5 ist deutlich zu erkennen, daß der Abstand der Signalfrequenz zu den Störfrequenzen um so größer wird, je steiler der Gradient der Frequenzänderung d$f$/d$t$, d.h. die jeweilige Frequenzgeschwindigkeit ist. Da in dem in Fig. 5 dargestellten System alle Informationsfrequenzkanäle stets proportional zueinander verändert werden, ergibt sich für die höheren Informationsfrequenzkanäle ein zunehmend steilerer Gradient und damit eine immer bessere Trennung der aktuellen Signalfrequenz von den Störfrequenzen.

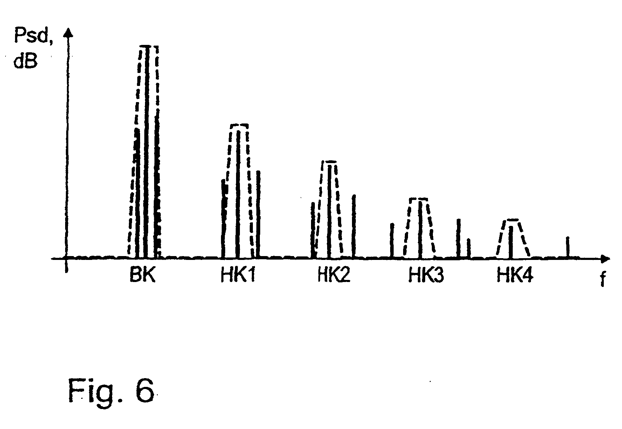

In Fig. 6 ist diese Funktionsweise bzw. der Effekt schematisch für ein System mit einem Bezugsfrequenzkanal und vier Informationsfrequenzkanälen, mit jeweils zwei benachbarten Störfrequenzen gezeigt. Die in Fig. 6 dargestellte gestrichelte Linie symbolisiert die Charakteristik eines üblicherweise eingesetzten Filters. Es ist deutlich zu erkennen, daß selbst bei konstanter Fensterbreite des Filters für die höheren Informationsfrequenzen eine zunehmend bessere Trennschärfe erreicht wird. Im Vergleich zu herkömmlichen Verfahren ergibt sich insgesamt eine deutlich bessere Auflösung. Hierbei ist insbesondere zu erwähnen, daß mit dem anmeldungsgemäßen Verfahren vor allem auch die höheren Informationsfrequenzkanäle, die auf der Übertragungsstrecke stets am stärksten gedämpft werden und folglich beim Empfänger mit der geringsten Energie eintreffen, besser aus dem Rauschen herausgelöst werden können. Aus diesem Verhalten wird deutlich, daß man beispielsweise bei Störfrequenzen, welche sehr dicht bei der eigentlichen Signalfrequenz liegen, zur besseren Trennung zweckmäßigerweise einen steileren Frequenzgradienten auswählt, d. h. die Driftgeschwindigkeit der Frequenzen erhöht, wohingegen bei größeren Abständen flachere Gradienten ausreichen können. Für derartige Anpassungen kann beispielsweise entweder eine vorbereitete Palette von Frequenzverschiebemustern genutzt oder eine operative Anpassung der Gradienten der Frequenzänderung vorgenommen werden. Letzteres ist beispielsweise leicht möglich, wenn die Verbindungen bidirektional genutzt werden, d.h. die Sendeeinheit auch empfangen und die Empfängereinheit auch senden kann. Auf diese Weise können beispielsweise zwischen der Sendeeinheit und der Empfängereinheit Analysen des Kanalansprechverhaltens durchgeführt bzw. ausgetauscht werden oder auch ein entsprechendes Mustertraining durchgeführt werden, woraufhin die jeweils optimalen Gradienten für die Frequenzverschiebung eingestellt werden. Allerdings können bei entsprechend günstigen stationären Übertragungsbedingungen, unter denen die Störungen vernachlässigbar klein sind, die Gradienten im Grenzfall auch Null werden.

In diesem Zusammenhang sei angemerkt, daß es sich grundsätzlich anbietet, zur Maximierung der Übertragungsrate die Taktfrequenz proportional zur Frequenzhöhe des Bezugsfrequenzkanals zu verändern, da stets nur eine bestimmte Anzahl von Schwingungsperioden erforderlich ist, um das, Gesamtsignal hinsichtlich der darin enthaltenen Einzelkomponenten zu analysieren.

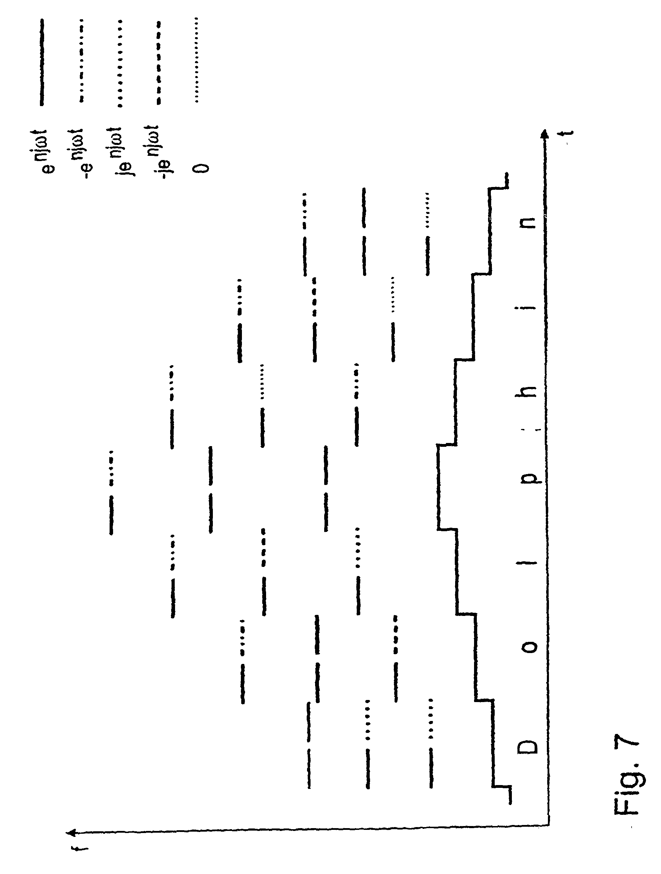

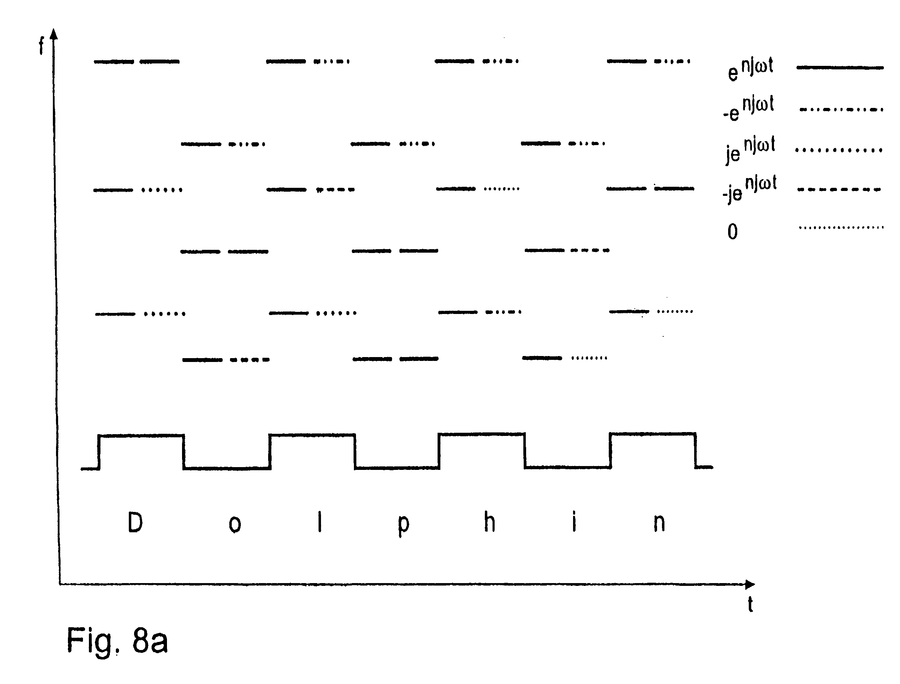

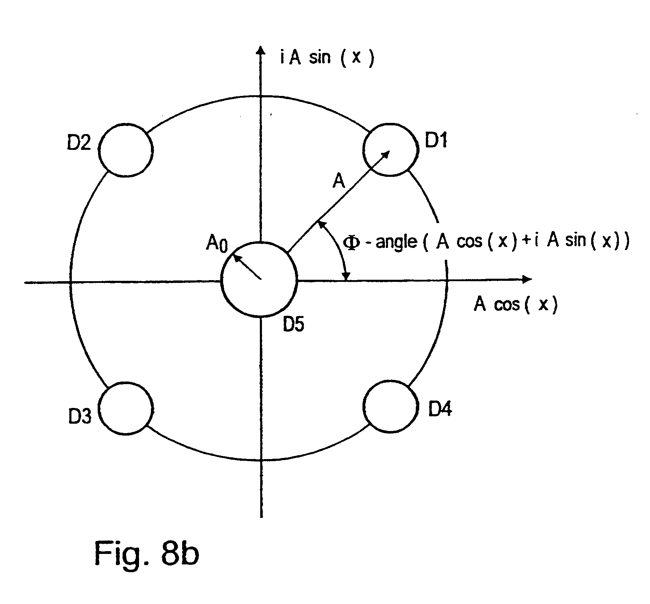

In Fig. 7 und 8 a, b sind weitere Möglichkeiten dargestellt, welche insbesondere bei einer stufenweisen Änderung des Bezugsfrequenzkanals auftreten (kein Gegenstand der beanspruchten Erfindung). Diese Möglichkeiten sind insbesondere dann eine interessante Alternative zur FGM, wenn der Zeitversatz zwischen der Signalfrequenz, und den Störfrequenzen ausreichend groß ist beispielsweise im Bereich von mehreren Millisekunden liegt. In diesem Fall kann eine gute Trennung zwischen den Signalfrequenzen und den Störfrequenzen auch dadurch erreicht werden, wenn alle Kanäle gleichzeitig von Takt zu Takt oder in Schritten zu mehreren Takten sprunghaft etwas zu höheren oder kleineren Frequenzwerten verschoben werden, innerhalb der Stufen jedoch konstant gehalten werden. Auch in diesem Fall ist es natürlich von Vorteil, die Frequenzverschiebung möglichst so vorzunehmen, daß die signalintemen Proportionen in allen Stufen gleichermaßen definiert sind. Dies läßt sich am leichtesten mittels proportionaler oder paralleler stufenförmiger Veränderungen erreichen. Diese Alternative wird allgemein als Frequenz-Sprung-Methode oder als Frequenz-Stufen-Methode, abgekürzt FSM bezeichnet. Anhand von den Figuren 7 und 8 a, b ist klar ersichtlich wie beispielsweise durch zusätzliche relative Phasencodierung eine pentäre Codierung der einzelnen Informationsfrequenzkaäle erzeugt wird. Hierzu wird zur Erhöhung der Sicherheit am Anfang eines jeden Taktes auf allen Informationsfrequenzkanälen ein Referenzsignal gesendet, dem in der zweiten Takthälfte das entsprechend codierte Signal folgt. Wie in der seitlichen Legende in Figur 7 u. 8ä dargestellt ist, kann eine Unterscheidung von jeweils 5 Zuständen erfolgen, nämlich Kein Signal (0) und vier digitalen Stufen mit der RPDM. Insgesamt ergeben sich somit für jeden Takt bei einem Informationssignal bestehend aus einem Bezugsfrequenzkanal (BK) und 3 Informationsfrequenzkanälen (HK) $5^3$ = 125 Kombinationsmöglichkeiten, die einer Codierung zur Verfügung stehen.

Die Fig 8b zeigt als Beispiel das Prinzip einer pentären Codierung eines Informationsfrequenzkanals. Die mit Bezugszeichen D1 bis D4 angegebenen Punkte sind Signalkomponenten, bei denen die Amplitude einen Schwellenwert Ao überschreitet und vier unterschiedliche Phasenwinkel F bzw. vier Winkelbereiche beispielsweise mittels der RPWM oder der RPDM digital unterschieden werden können, und Zustand D5 beinhaltet, daß die Amplitude der Signalkomponente kleiner als der Schwellenwert Ao ist.

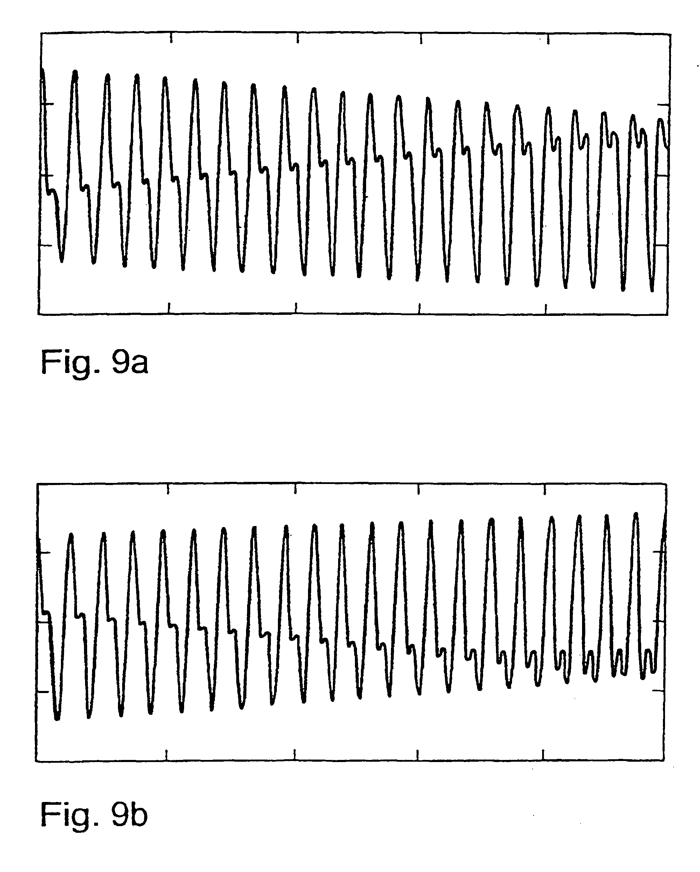

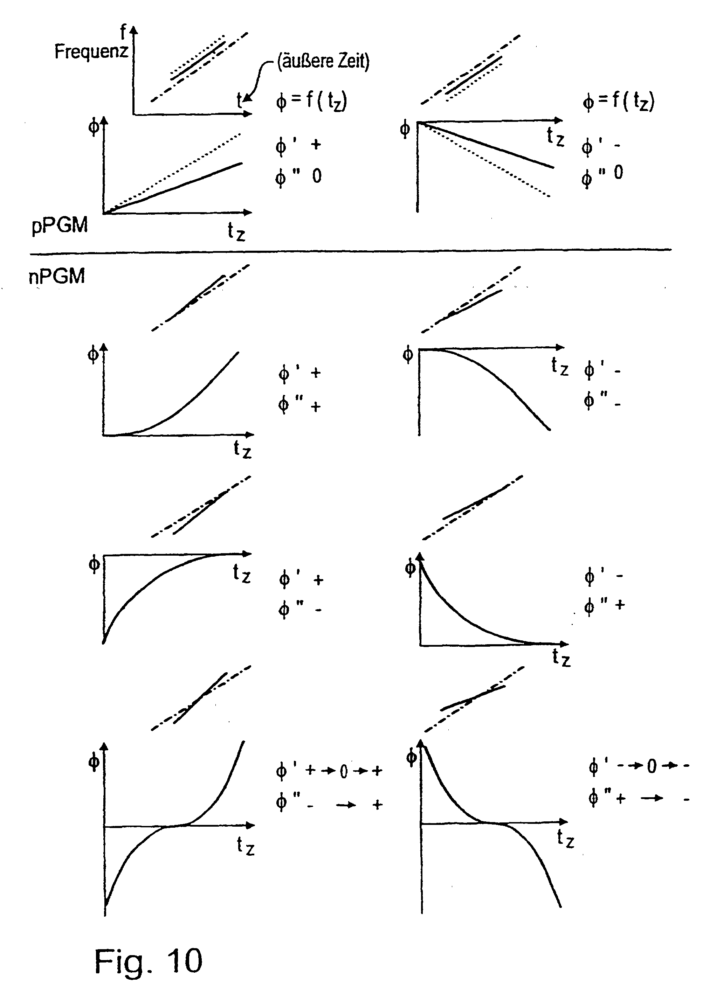

Eine weitere Methode zur Informationskodierung ist beispielsweise die Phasen-Gradienten-Methode oder auch Phasen-Geschwindigkeits-Methode, welche im folgenden als PGM abgekürzt wird und mit den Fig. 9a und 9b sowie Fig. 10 veranschaulicht werden soll. Die Fig. 9a und 9b zeigen die sogenannte proportionale Phasen-Geschwindigkeits-Methode (pPGM), wobei die Fig. 10 zusätzlich die Verhältnisse bei der nichtproportionalen Phasen-Gradienten-Methode (nPGM) darstellt.

Das übergeordnete Prinzip der PGM läßt sich am einfachsten anhand der folgenden Ausgangskonfiguration erklären.

Gegeben sei ein System, in dem die Informationsfrequenzkanäle stets eine harmonische Reihe bilden, d.h. Frequenzänderungen nur mittels der proportionalen FGM durchgeführt werden. Herausgegriffen sei ein beliebiger Informationsfrequenzkanal, auf dem die entsprechende Frequenz nunmehr aber in einem gegebenen Taktintervall nicht exakt als Oberton des GT gesendet wird, sondern gegenüber der entsprechenden "Sollfrequenz" geringfügig (typischerweise weniger als 0,5 % des Sollwertes) nach oben oder unten verstimmt ist (siehe Abb. 10 obere Reihe). Im Grunde genommen wird hier eine Frequenzverschiebung vorgenommen, die jedoch so gering ist, daß empfängerseitig allein anhand der Frequenzanalyse schwerlich als Modulation erkannt und folglich auch nicht als digitale Zustandsgröße interpretiert werden kann. Die Frequenz liegt weiterhin im Schärfebereich des betreffenden Analysefilters. Je nachdem, ob sie nun aber etwas höher oder niedriger als ihr Sollwert ist, kommt es in der Überlagerung mit dem GT zu dem in Abb. 9a bzw. 9b dargestellten Bild, in dem der relative Phasenwinkel kontinuierlich zu bzw. abnimmt. Die Phase der Frequenz des Informationsfrequenzkanals eilt der des GT voraus oder bleibt entsprechend zurück. In dem entsprechenden Takt wird somit ein Phasengradient erzeugt, dessen Richtung schon mit dem bloßen Auge erkannt und gleichermaßen unproblematisch bestimmt werden kann. Bei Auswertung der Phasengradienten in Bezug zur momentanen Periodendauer des GT ergibt sich im vorliegenden Fall ein konstanter Anstieg. Voraussetzung für eine solche lineare Charakteristik ist jedoch, daß bei einer kontinuierlichen Frequenzveränderungen des gesamten Frequenzsystems die internen, in dem gegebenen Taktintervall nunmehr aber leicht veränderten Proportionen beibehalten werden, d.h. sich auch die relative Verstimmung der Frequenz des Informationsfrequenzkanals im Bezug zum GT nicht ändert. Die Erfüllung dieser Bedingung sei durch die Bezeichnung pPGM deutlich gemacht, wobei das kleine p für proportional steht. Zyklisch betrachtet ergibt sich im Fall der pPGM eine gleichförmige Rechts- bzw. eine Linksdrehung der Informationsfrequenzphase gegenüber der Phase des Bezugsfrequenzkanals.

Dieser Effekt läßt sich nun sehr vorteilhaft für die Informationscodierung nutzen, da in der Signalanalyse der Drehsinn, d.h. die Richtung des Phasengradienten wesentlich leichter bestimmt werden kann, als z.B. der Betrag der Phasenverschiebung. Mathematisch bedeutet das, daß lediglich das Vorzeichen der ersten Ableitung der relativen Phasenverschiebung zwischen der Frequenz des Informationsfrequenzsignals und GT bestimmt werden muß, das mit anderen Worten besagt, ob die relative Phasengeschwindigkeit größer oder kleiner als Null ist (vergl Abb. 10 oben).

Dieser Vorgang kann nun in jedem Zeittakt für jeden Informationskanal individuell angewendet werden. Nutzt man ihm z.B. in Kombination mit dem bisher beschriebenen einfachen Ein- und Ausschalten, ergeben sich für jeden Informationskanal in einem gegebenen Zeittakt bezüglich des GT bis zu vier unterschiedliche diskrete Zustände: 1. Kein Signal, 2. Signal mit positivem Phasengradient, 3. Signal mit negativem Phasengradient und 4. Signal ohne Phasengradient, wobei man ggf. in der Praxis auf den 4. Zustand verzichten wird, da die quatemäre Codierung de facto eine temäre Phasengradientcodierung beinhaltet, die unter Umständen nicht ganz so sicher wie die binäre zu realisieren ist, weil sich einer dieser Digitalwerte auf einen singulären Geschwindigkeitswert (Null) bezieht. Diese Problematik hängt aber von der jeweiligen Empfangsqualität ab, denn senderseitig lassen sich alle Gradienten in der Regel mit großer Präzision generieren. Theoretisch könnte jedenfalls im ersten Fall die Informationsrate auf jedem Kanal gegenüber dem einfachen Ein- und Ausschalten verdoppelt und bei der zweiten Variante um ein Drittel gesteigert werden.

Als Alternative hierzu können auch entsprechend viele Informationsfrequenzkanäle eingespart werden, womit das Frequenzspektrum insgesamt schmaler gehalten werden kann, was ebenfalls mehrere Vorteile mit sich bringt, die wahlweise genutzt werden können. In diesem Fall müssen die Transducer nicht ganz so breitbandig sein, was sich u. a. bei Verwendung von Transducerkaskaden dahingehend auswirken kann, daß einzelne oder ggf. auch mehrere Elemente eingespart werden können. Das kann nützlich sein, um z.B. die Gerätekosten zu reduzieren. Andererseits kann aber auch bei unveränderter Gerätekonfiguration die nunmehr gegebene größere Variabilität und Adaptivität des Systems genutzt werden. So kann man wahlweise die Informationsrate dadurch erhöhen, daß bei Weglassen der niedrigeren Frequenzen die Taktzeiten verkürzt werden, während sich bei Verzicht auf die höheren Frequenzen eine größere Übertragungsreichweite ergibt. Es gibt somit eine ganze Reihe guter Gründe, eine möglichst große Kardinalität (Anzahl von Digitalstufen) anzustreben und so die Informationsdichte auf den Informationskanälen zu erhöhen.

Die pPGM läßt sich nun dahingehend weiter ausbauen, daß neben der Richtung z.B. auch unterschiedliche Anstiege von linearen Phasengradienten, die sich durch unterschiedlich starke Verstimmungen der Frequenzen der Informationsfrequenzkanäle erzeugen lassen, für die Codierung genutzt werden können, wobei sich je nach der im konkreten Fall erreichbaren Diskretisierung weitere Kombinations- und Codierungsmöglichkeiten ergeben.

In Verbindung mit der FGM können positive oder negative Phasengradienten aber auch durch solche Frequenzveränderung der Informationsfrequenzkanäle erzeugt werden, die nicht ganz exakt proportional zur Veränderung des Grundtones durchgeführt werden (siehe Abb. 10 unten).

Zur Unterscheidung von der pPGM sei diese Variante als nPGM bezeichnet, wobei das n für nicht proportional steht. Die nPGM kann etwa dergestalt realisiert werden, daß die Frequenz des jeweiligen Informationsfrequenzkanals in einem gegebenen Taktintervall geringfügig schneller oder langsamer verändert wird, als es z.B. die Basisvariante der proportionalen FGM vorsieht. Es ist nunmehr klar erkennbar, daß beide Varianten der PGM am günstigsten für harmonische Frequenzreihen in Verbindung mit der proportionalen FGM anzuwenden sind.

Das Grundprinzip der sich gegenüberstehenden Alternativmethode zur Erzeugung von Phasengradienten besteht mit anderen Worten darin, die proportionale FGM dahingehend zu modifizieren, daß nun auch innerhalb eines jeden Taktes für jede Signalkomponente individuell ein kleiner zusätzlicher, typischerweise linearer Frequenzgradient erzeugt werden kann. Dann ergibt sich im Unterschied zur pPGM in der Überlagerung mit dem GT anstelle des linearen Phasendrift eine etwas andere Charakteristik, nämlich typischerweise eine quadratische Kurve, die einer beschleunigten Winkelbewegung entspricht, deren Richtung und Form jedoch von der Lage der Start und Endwerte der jeweiligen Frequenzänderung bezüglich der Sollwertkurve abhängt (vergl. Abb. 10). Bei der nPGM können allein schon anhand der Vorzeichen der ersten und zweiten Ableitung der relativen Phasenwinkel als Funktion der Zykluszeit des GT bis zu 6 Konfigurationen unterschieden werden. Nimmt man nun beide Varianten zusammen, ergeben sich für die PGM insgesamt bis zu 8 unterschiedliche Vorzeichenkombinationen.

Interessant an der nPGM ist aber auch, daß ggf. zusätzlich zu den Vorzeichen auch bestimmte relative Phasenwinkel , z.B. die Phase der Start- oder Endwerte oder der Schnittpunkte mit der Sollwertkurve im Sinne der RPWM genutzt werden können.

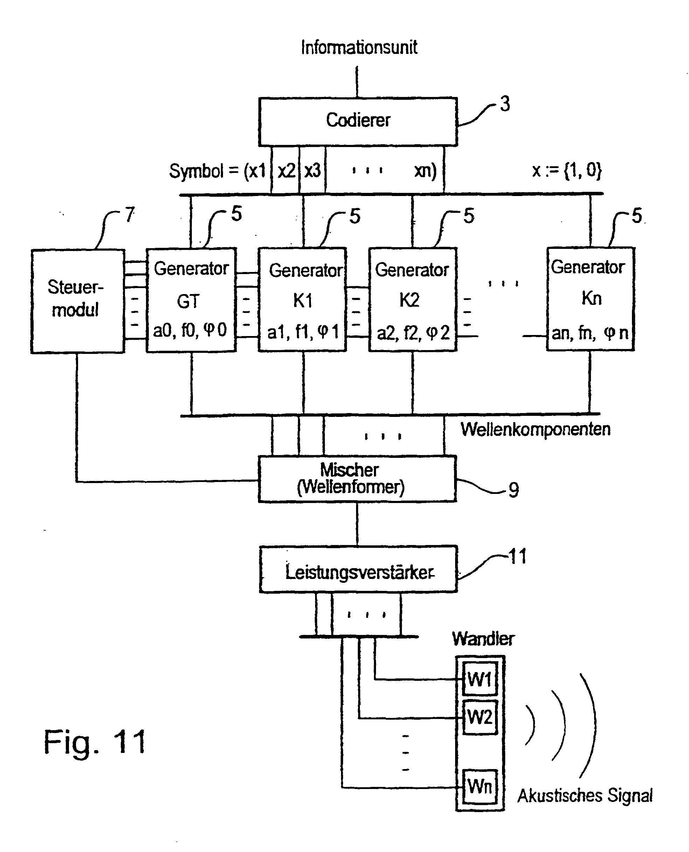

In Fig. 11 ist der Grundaufbau einer Sendeeinheit zur Informationscodierung dargestellt. Das Grundprinzip weist eine Informationseinheit auf, welche die zu kodierende Information einem Codierer 3 zuführt. Der Codierer verschlüsselt die von der Informationseinheit gelieferte Information in eine entsprechend der Frequenzkanäle bestehend aus Bezugsfrequenzkanal und Informationsfrequenzkanal notwendigen Codierung und führt die codierte Information entsprechend dem Mittel zum Erzeugen eines Bezugsfrequenzkanals und zumindest einem Informationsfrequenzkanals in Form von Generatoren 5 zu, welche von einem Steuermodul 7 angesteuert werden. Die von den Generatoren erzeugten Wellenkomponenten mit gegebener Amplitude, Frequenz und Phase werden einem Mischer 9 zugeführt, welche wiederum von dem Steuermodul 7 ansteuerbar ist.

Gemäß dieser Ausführungsform wird das in dem Mischer erzeugte Informationssignal, falls erforderlich einem Leistungsverstärker 11 zugeführt, welche das Informationssignal entsprechend dem Übertragungsmedium angepaßten Wandler bzw. Wandlerkaskade zuführt.

Gemäß dieser Ausführungsform ist für jeden Frequenzkanal ein Generator vorgesehen.

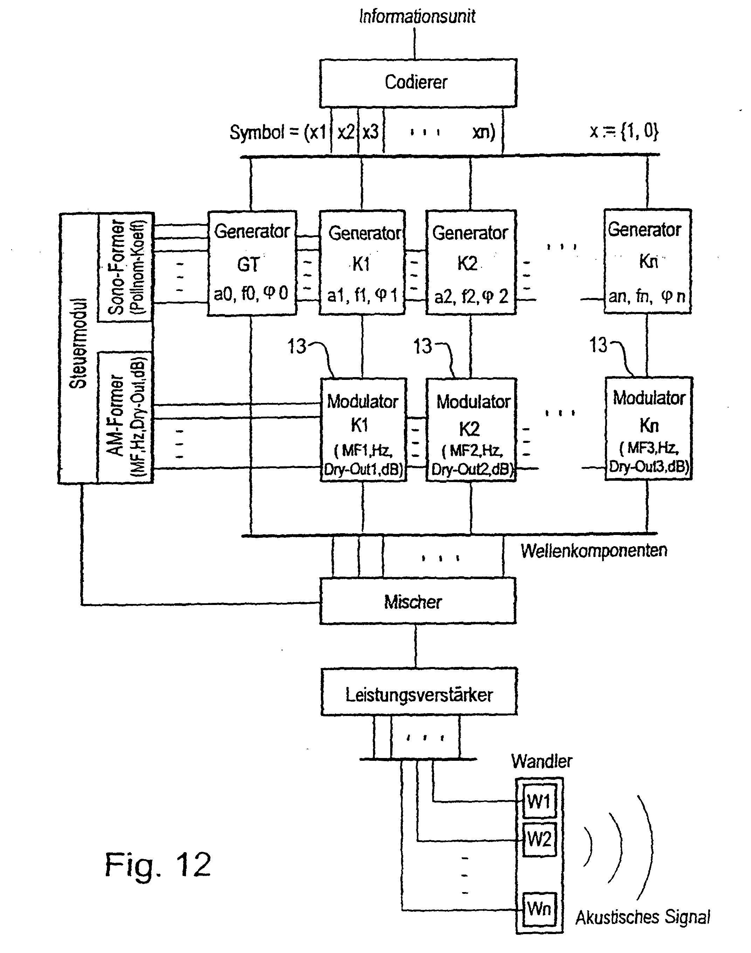

Die in Fig. 12 gezeigte Ausführungsform einer bevorzugten Sendeeinheit wird dargestellt, wenn eine Amplitudenmodulation hinsichtlich des Informationssignals vorgenommen werden soll. Hierzu wird bevor das in Einzelkomponenten hinsichtlich des Bezugsfrequenzkanals und der Informationskanäle zerlegte Informationssignals dem Mischer zugeführt wird, das Informationssignal über beispielsweise jeweils einem Modulator für jeden Informationsfrequenzkanal unter Ansteuerung von dem Steuermodul zugeführt.

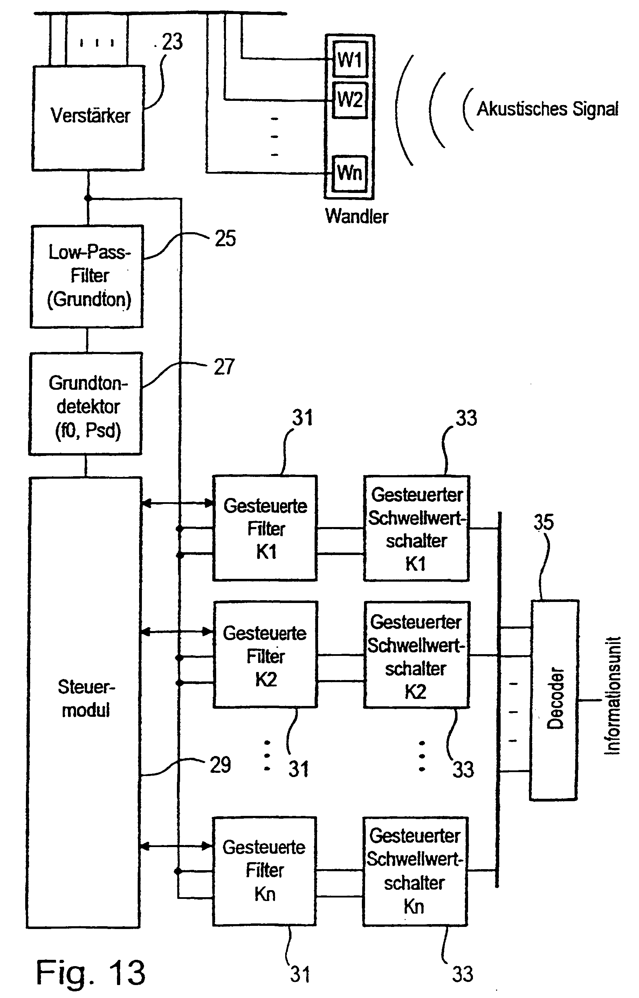

In Fig. 13 ist eine Ausführungsform einer Empfangseinheit des anmeldungsgemäßen Systems dargestellt. Ein entsprechend dem Übertragungsmedium angepaßter Wandler bzw. Wandlerkaskade nimmt das ankommende Informationssignal, welches in Fig. 13 als akkustisches Signal dargestellt ist, auf und führt es einem Verstärker 23 zu. Hinter dem Verstärker ist ein Filter 25 zur Trennung und Analyse der einzelnen Frequenzkanäle und insbesondere zum Herausfiltern des Bezugsfrequenzkanals vorgesehen. Das von dem Filter, vorzugsweise ein Low-Pass-Filter, kommende Signal wird dem Bezugsfrequenzdetektor 27 zugeführt, welches die Bezugsfrequenz und die Empfangsstärke ermittelt. Diese Daten werden dem Steuermodul 29 der Empfangseinheit zugeführt. Parallel hierzu wird das Informationssignal vor Eintreten in den Low-Pass-Filter 25 abgegriffen und den ansteuerbaren Filtern 31 für die einzelnen Informationsfrequenzkanäle zugeführt. Die von dem Filter abgehenden Signale werden in einem ansteuerbaren Schwellwertschalter 33 analysiert und einem Dekoder 35 zugeführt, welcher die ursprünglich vorhandene Information entschlüsselt.

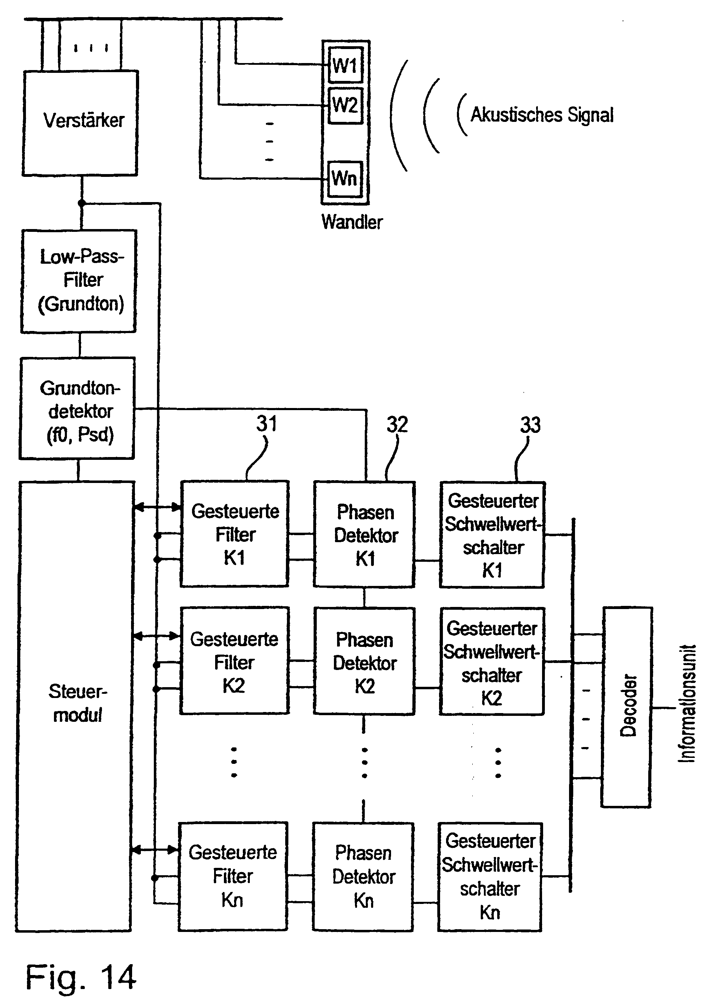

In Fig. 14 ist eine weitere Ausführungsform dargestellt, welche zusätzlich Phasendetektoren für beispielsweise die proportionale bzw. nichtproportionale Phasen-Geschwindigkeits-Methode bzw. der Phasendifferenz-Methode dargestellt. Zur Analyse der Phasenkomponenten werden hierzu zwischen den ansteuerbaren Filter 31 und den ansteuerbaren Schwellwertschalter 33 die Phasendetektoren 32, vorzugsweise entsprechend der Anzahl der zu ermittelnden Informationsfrequenzkanäle angeordnet, wobei zur Phasenbestimmung als Referenz die Bezugsfrequenz beim Grundton-Detektor abgegriffen wird.

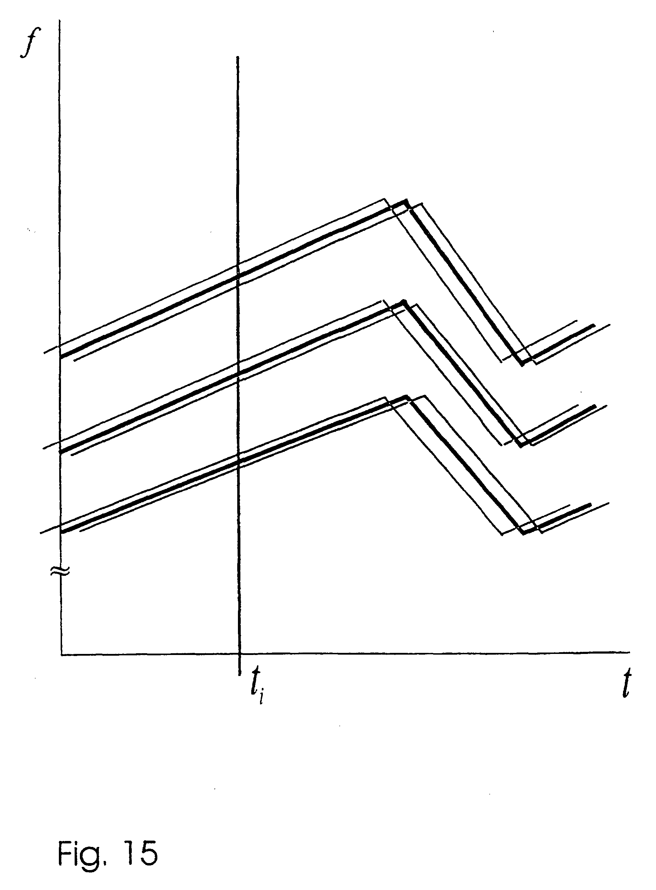

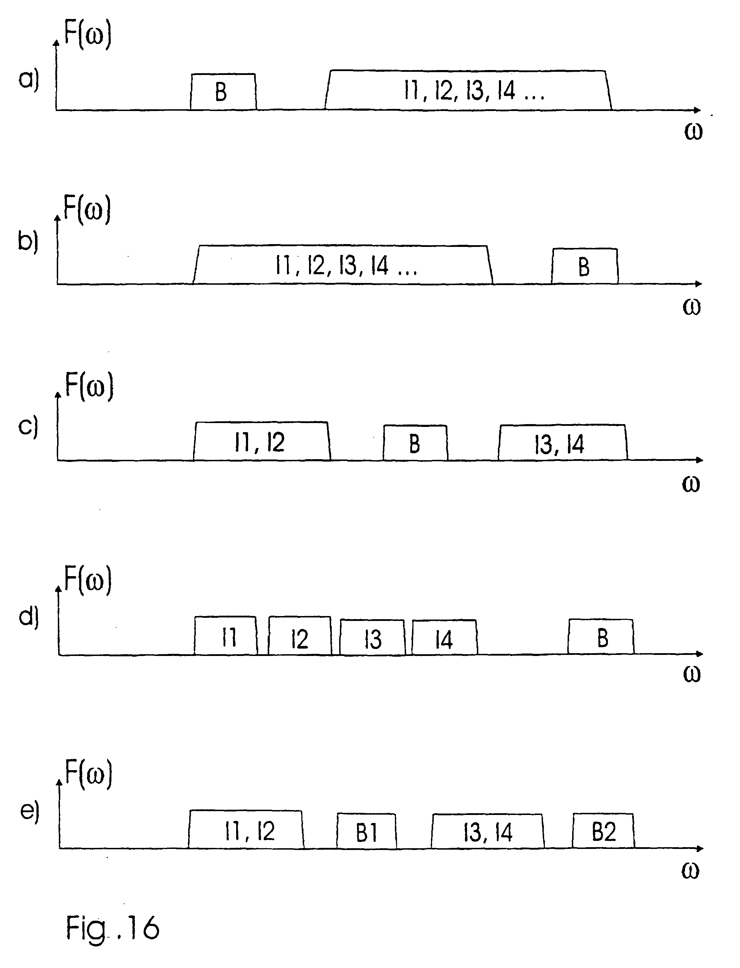

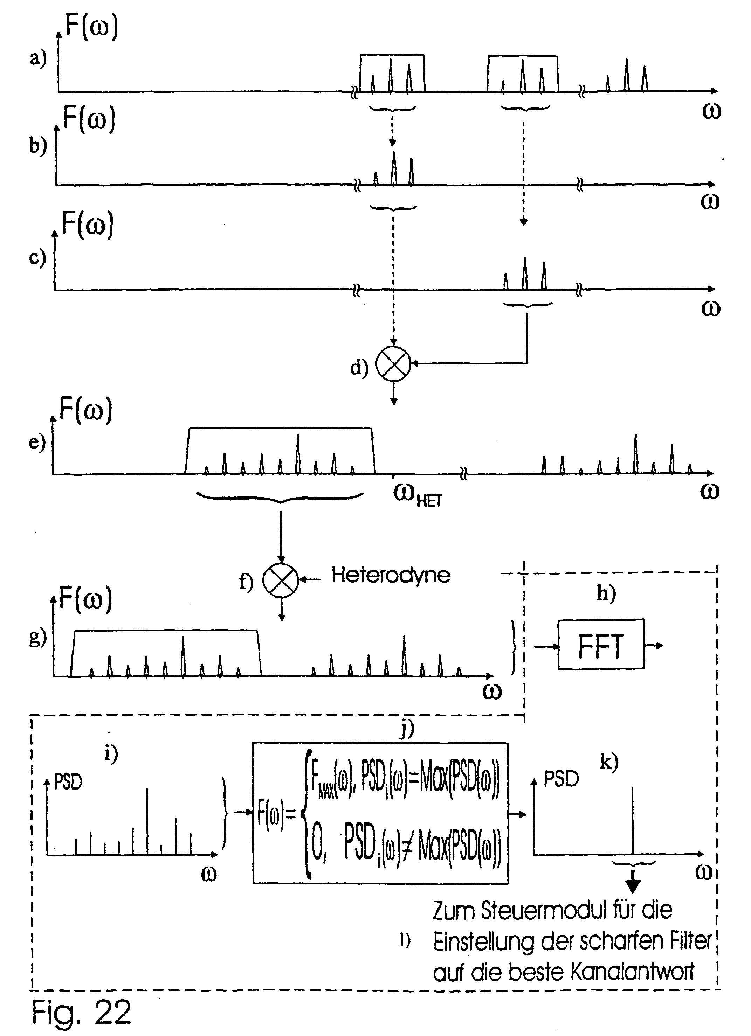

Hinsichtlich einer bevorzugten Signalverarbeitung wird im folgenden anhand der Figuren 15 bis 24 detailliert auf unterschiedliche Ausführungsformen zur Signalverarbeitung eingegangen werden.

Das anmeldungsgemäße Verfahren beinhaltet zwei wesentliche Grundfunktionen, die auf unterschiedliche Weise realisiert und kombiniert, ggf. auch einzeln angewendet werden können. Diese Grundfunktionen seien als vollständige Doppler- Kompensation, abgekürzt vDK und als "Kanalreinigung", abgekürzt KR bezeichnet. Die entsprechenden Grundprinzipien seien zunächst separat erklärt, bevor dann auf die diversen verfahrenstechnischen Modifikationsund Kombinationsmöglichkeiten eingegangen wird:

1. Lösung des Doppler- Problems:

Zur Erläuterung der Grundprinzipen der vDK sei hier zunächst ein einfaches Beispiel ausgewählt, bei dem der niedrigste Frequenzkanal die Bezugskomponente liefert und die Frequenzen der Informationskanäle eine harmonische Reihe bilden, d.h. in einem ganzzahligen Verhältnis zur Bezugsfrequenz stehen. Falls seitens des Senders eine Variation der Frequenzen erfolgt, so mittels der pVMT. Seitens des Empfängers werden alle Signalkomponenten gleich im ersten Schritt, beispielsweise mittels einer Kaskade von Bandpaßfiltern (BPF) voneinander getrennt. Der Einfachheit halber seien zunächst auch ideale Übertragungsbedingungen angenommen, so daß jede Komponente nur aus einer Kanalantwort besteht und alle Komponenten in etwa mit der gleichen Stärke gesendet und empfangen werden können. Derart günstige Verhältnisse können z.B. bei der Ausbreitung von elektromagnetischen Wellen in der Luft vorkommen. An diesem Beispiel soll zunächst erklärt werden, daß und wie durch eine geeignete Bearbeitung eine vollständige Doppler-Kompensation erfolgen kann.

Das Doppler-Problem besteht darin, daß infolge von Relativbewegungen zwischen Sender und Empfänger Frequenzverschiebungen auftreten die oftmals nicht genau vorhergesagt werden können, weil beispielsweise die Geschwindigkeit der Relativbewegung nicht genau bekannt ist. Damit lassen sich aber auch die Phasenlagen der Informationssignale nicht mehr genau bestimmen, was erhebliche Einschränkungen für alle Formen der Informationsübertragung bedeutet, die eine Phasencodierung verwenden. Dieses Problem kann mittels der differenziellen Phasencodierung, bei der nicht die Phasenwinkel an sich sondern nur deren Veränderung von Takt zu Takt betrachtet wird, etwas reduziert, jedoch nicht grundsätzlich gelöst werden. Es läßt sich jedoch eine nahezu hundertprozentige Doppler - Kompensation erreichen, wenn die einzelnen Informationskomponenten auf geeignete Weise jeweils gemeinsam mit der Bezugskomponente bearbeitet werden. Eine vorteilhafte Lösung beinhaltet, einen paarweisen Doppler- Abgleich, abgekürzt pDA, der auf unterschiedliche Weise realisiert werden kann. Eine einfache Möglichkeit soll im folgenden Beispiel etwas ausführlicher erläutert werden:

Exemplarisch für alle anderen sei hier für einen Zeittakt die Bearbeitung der ersten Informationskomponente dargestellt, deren Frequenz fik und demzufolge auch deren Winkelgeschwindigkeit $\omega_{ik}$ doppelt so groß ist, wie die entsprechenden Werte $f_b$ und $\omega_b$ der Bezugskomponente. Angenommen, das Empfangssignal liegt in digitaler Form vor, dann können die vom Sender abgegebenen Signalanteile send b und send ik in der folgenden Form dargestellt werden:

$$send_b[n] = \sqrt{\frac{2E}{N}}\cos(\omega nt_s + k\omega(nt_s)^2) \tag{1}$$

$$send_{ik}[n] = \sqrt{\frac{2E}{N}}\cos(2\omega nts + k\,2\omega(nts)^2 + \theta_{ik} + \theta_{\inf}) \tag{2}$$

wobei N - die Gesamtzahl der Abtastungen in dem gegebenen Taktintervall, n - die Nummer der jeweils aktuelle Abtastung, ts - die Länge der Zeitintervalle in denen die Abtastung erfolgte und demzufolge nts - die diskrete Zeit, E die Energie, $\theta_{ik}$ - die Anfangsphase und $\theta inf$ den für die Codierung verwendeten Winkel der Informationskomponente bezeichnen und Faktor k die Steilheit der bei der proportionalen VMT aktiv erzeugten Frequenzverschiebung definiert.

Allgemein kann k eine beliebige geeignet Funktion der Zeit sein, positive oder auch negative Werte annehmen oder auch Null sein. Letzteres bedeutet, daß sie Verwendung konstanter Sendefrequenzen als Spezialfall in die Betrachtung eingeschlossen sind.

Da die Phasenlage der Bezugsfrequenz senderseitig nicht verändert und im weiteren auch keine Rolle spielen wird, wurde in Gleichung (1) der betreffende Wert gleich Null gesetzt.

Infolge des Doppler-Beaufschlagung unterscheiden sich die empfangenen Signalkomponenten empf b und empf ik von den gesendeten durch ein zusätzliches Glied:

$$empf_b[n] = \sqrt{\frac{2E}{N}}\cos(\omega nt_s + k\omega(nt_s)^2 + \underline{D\omega nt_s}) \tag{4}$$

$$empf_{ik}[n] = \sqrt{\frac{2E}{N}}\cos(2\omega nt_s + k2\omega(nt_s)^2 + \underline{D2\omega nt_s} + \theta_{ik} + \theta_{\inf}) \tag{5}$$

wobei D - den Doppler- Koeffizient bezeichnet, der das Verhältnis von Relativgeschwindigkeit zwischen Sender und Empfänger (mit positivem Vorzeichen bei gegenseitiger Annäherung und negativem Vorzeichen bei Entfernung) und der Geschwindigkeit der Signalausbreitung im Übertragungsmedium beinhaltet.

Anhand der unterstrichenen Glieder dieser Gleichungen wird deutlich, daß sich die Doppler-Beaufschlagung der beiden Signalkomponenten genau um den Proportionalitätsfaktor unterscheidet, der auch das Verhältnis der entsprechenden Sendefrequenzen definiert. Im vorliegenden Beispiel ist dieser Proportionalitätsfaktor gleich 2.

Da der Proportionalitätsfaktor also bekannt ist, spielen die genauen Beträge der durch den Doppler-Effekt verursachten Phasenverschiebungen praktisch keine Rolle mehr. Wenn nämlich die Bezugskomponente so transformiert wird, daß sie die selbe Frequenzcharakteristik wie die jeweils zu analysierende Informationskomponente bekommt, ergibt sich für beide exakt die gleiche Doppler-Verschiebung. Im vorliegenden Beispiel kann aus der Bezugskomponente durch Multiplikation mit sich selbst eine solche, mit der Informationskomponente Doppler-identische Referenz Rf erzeugt werden. Nach der Multiplikationsregel ergibt sich:

$$Rf[n] = empf_b[n] \times empf_b[n]$$

$$= \sqrt{\frac{2E}{N}}\cos(\omega nt_s + k\omega(nt_s)^2 + D\omega nt_s) \times \sqrt{\frac{2E}{N}}\cos(\omega nt_s + k\omega(nt_s)^2 + D\omega nt_s)$$

$$= \frac{2E}{N}\frac{1}{2}[\cos(0) + \cos(2\omega nt_s + k2\omega(nt_s)^2 + D2\omega nt_s)]$$

Nach Wegfiltern des nicht benötigten Seitenbandes und Skalierung mit dem Faktor $\sqrt{2N}$ / E bekommen wir schließlich ein normiertes Referenzsignal Rf welches sich hinsichtlich der Phase von der in Gleichung (5) dargestellten Informationskomponente unterscheidet:

$$Rf'[n] = \sqrt{\frac{2}{N}}\cos[2\omega nt_s + k2\omega(nt_s)^2 + d2\omega nt_s] \tag{6}$$

Dieses Referenzsignal kann somit gewissermaßen als signalinteme Uhr verwendet werden, mit deren Hilfe die Phasenwinkel der Informationskomponente bestimmt werden können.

In ähnlicher Weise können aus der Bezugskomponente auch für alle weiteren, in dem Empfangssignal enthaltenen Informationskomponenten die jeweils erforderlichen Referenzen entwickelt werden. Nur muß dann mehrfach multipliziert und ggf. auch gefiltert werden. Generell lassen sich natürlich auch die Informationskomponenten in der gleichen Weise umwandeln, was sich z.B. dann als nützlich erweisen kann, wenn anders als in dem hier ausgewählten Beispiel die Frequenzen der Informationskomponenten niedriger als die der Bezugskomponente liegen oder zur derselben in keinem ganzzahligen Verhältnis stehen. Im letzten Fall kann der gleiche Vorgang individuell für jede Seite der jeweils aus Bezugs- und Informationskomponente zu bildenden Paare so oft angewendet werden, bis beide Anteile zur Deckung kommen. Da sich aber mit jeder Multiplikation auch die Anzahl der im jeweiligen Spektrum enthaltenen Frequenzanteile vervielfacht, wird man bemüht sein die Kanäle so zu legen, daß möglichst wenig Schritte für den paarweisen Doppler- Abgleich erforderlich sind.

Generell muß bei allen Anwendungen für phasencodierte Signale hinsichtlich der Auswahl einer für den paarweisen Doppler- Abgleich geeigneten Vorgehensweise auch beachtet werden, daß bei der Manipulation der Informationskomponenten kein Informationsverlust, beispielsweise durch mehrdeutige (ambigious)Phasenlagen, auftritt.

Im weiteren soll anhand des genannten Beispiels eine Möglichkeit erläutert werden, wie nach der oben beschriebenen Signalaufbereitung nun auf einfache Weise die Phasenlage der jeweiligen Informationskomponente bestimmt werden kann. Dazu kann beispielsweise eine Zerlegung der betreffenden Informationskomponente auf den die Quadratur - Funktionen des dazugehörigen Referenzsignals Rf '[n] durchgeführt werden, welche nachfolgend beschrieben wird.

Da die Referenz Rf '[n] in diesem Beispiel bereits in der Kosinusform vorliegt, können wir schreiben:

$$RfC\,[n] = Rf'[n]$$

Die entsprechende Sinus - Quadratur - Komponente RfS [n] kann man dann z.B. durch Bildung der ersten Ableitung von RfC [n] und entsprechende Normierung der Amplitude erhalten.

Jetzt schreiben wir für die Projektion der Informationskomponente auf die Kosinus - Quadratur - Komponente der Referenz:

$$CQ = \sum_{N1}^{N2} empf_{ik}[n] \times RfC[n]$$

$$= \sum_{N1}^{N2} \sqrt{\frac{2E}{N}} \cos(2\omega nt_s + k2\omega(nt_s)^2 + D2\omega nt_s + \theta_{ik} + \theta_{\inf}) \times \sqrt{\frac{2}{N}} \cos(2\omega nt_s + k2\omega(nt_s)^2 + D2\omega nt_s)$$

$$= \frac{2}{N} \sum_{N1}^{N2} \frac{\sqrt{E}}{2} \cos(\theta_{ik} + \theta_{\inf}) + \frac{2}{N} \sum_{N1}^{N2} \frac{\sqrt{E}}{2} \cos(4\omega nt_s + k4\omega(nt_s)^2 + D4\omega nt_s + \theta_{ik} + \theta_{\inf})$$

wobei N1 den Anfang und N2 das Ende des jeweiligen Taktes bezeichnen.

Da im zweiten Summanden die Funktionswerte um Null schwingen, heben sich in der Summe die positiven und negativen Anteile auf, so daß dieses Glied insgesamt gegen Null strebt und somit ohne großen Fehler vernachlässigt werden kann:

$$CQ \approx \sqrt{E} \cdot \cos(\theta_{ik} + \theta_{\inf})$$

Entsprechend ergibt sich für die Projektion der empfangenen Informationskomponente auf die Sin-Quadratur- Komponente der Referenz:

$$SQ = \sum_{N1}^{N2} empf_{k1}[n] \times RfS[n]$$

$$= -\sum_{N1}^{N2} \sqrt{\frac{2E}{N}} \cos(2\omega nt_s + k2\omega(nt_s)^2 + d2\omega_s n_s t + \theta_{ik} + \theta_{inf}) \times \sqrt{\frac{2}{N}} \sin(2\omega nt_s + k2\omega(nt_s)^2 + d2\omega n_s t)$$

$$= -\frac{2}{N} \sum_{N1}^{N2} \frac{\sqrt{E}}{2} \sin(4\omega nt_s + k4\omega(nt_s)^2 + d4\omega n_s t + \theta_{ik} + \theta_{inf}) - \frac{2}{N} \sum_{N1}^{N2} \frac{\sqrt{E}}{2} \sin(-\theta_{ik} - \theta_{inf})$$

$$\approx -\frac{2}{N} \sum_{N1}^{N2} \frac{\sqrt{E}}{2} \sin(-\theta_{ik} - \theta_{inf}) = \sqrt{E} \sin(\theta_{ik} + \theta_{inf})$$

Im weiteren seien nun CQ und SQ als x- bzw. y- Koordinate eines Punktes im rechtwinkligen Koordinatensystem betrachte. Dann schließen die Verbindungslinie zwischen diesem Punkt und dem Koordinatenursprung und die Abszisse den gesuchten Phasenwinkel $\Theta$ ein. Dieser kann nun mit geeigneten Algorithmen leicht bestimmt werden. Eine anschauliche Darstellungsform ist z.B.:

$$\Theta = \arctan \frac{SQ}{CQ} = \arctan \frac{\sqrt{E} \sin(\theta_{ik} - \theta_{inf})}{\sqrt{E} \cos(\theta_{ik} - \theta_{inf})} = \theta_{ik} - \theta_{inf}$$

Die Phase der empfangenen Informationskomponente wird hier als Differenz zwischen der Anfangsphase der gesendeten Welle und der Codierungsphase dargestellt, d.h., daß sie innerhalb eines jeden Taktes invariant gegenüber der Zeit ist. Der Vollständigkeit halber sei dargestellt, daß ebensogut auch die Phasendifferenz zwischen dem vorangegangenen und dem aktuellen Takt zur Codierung genutzt werden kann. Bezeichnet man die Takte mit den Indizes i bzw. i+1, so ergibt sich für die differenzielle Phasencodierung:

$$\Theta^{i+1} = (\theta_{ik} - \theta_{inf}^{i+1}) - (\theta_{ik} - \theta_{inf}^{i}) = \theta_{inf}^{i} - \theta_{inf}^{i+1}$$

In analoger Weise lassen sich für jeden Zeittakt auch die Phasenlagen der übrigen Informationskomponenten mit hoher Genauigkeit bestimmen. Das wiederum bietet dem Anwender die Möglichkeit für eine entsprechend feine Diskretisierung der Phasenwinkel und damit für eine Steigerung der Informationsrate. Die oben beschriebene Methode der Phasenwinkelbestimmung sei im weiteren allgemein als CS- Projektion bezeichnet.

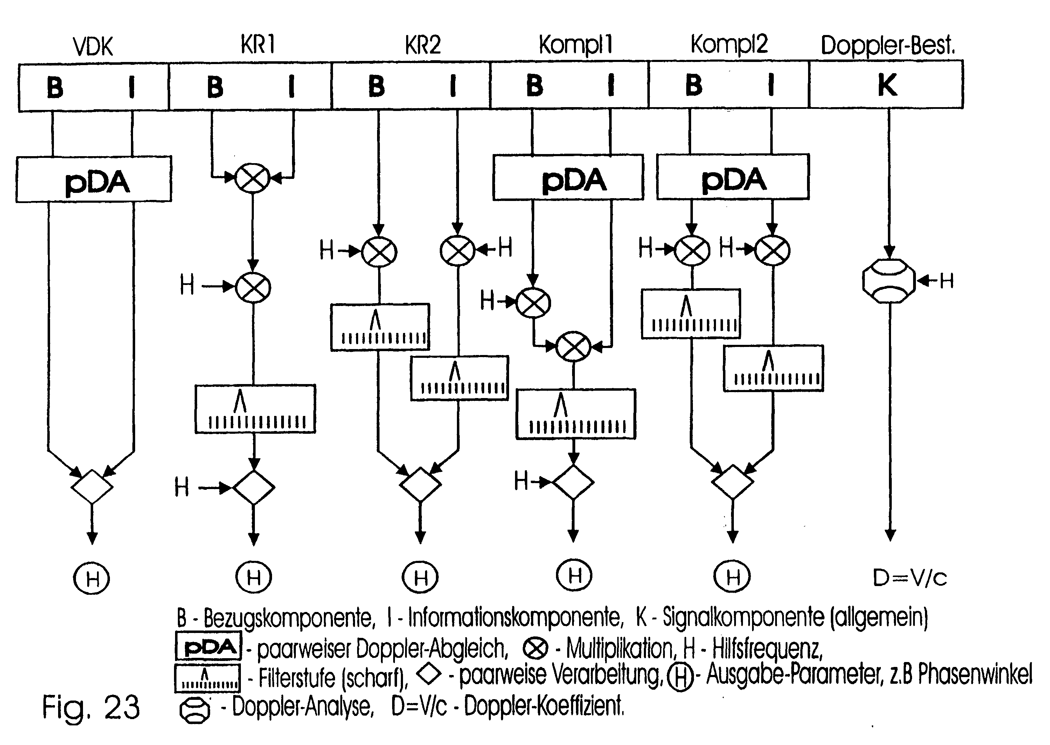

Die vDK bildet insbesondere die Grundlage für das Verfahren nach Anspruch 28. Fig. 23 veranschaulicht in der Gesamtübersicht nochmals die wichtigsten Elemente des Bearbeitungsflusses der vDK. Die Übersicht zeigt weiterhin, daß verschiedene der hier beschriebenen Elemente in ähnlicher Weise auch in anderen vorteilhaften Ausführungsformen Verwendung finden können.

2. Kanalreinigung:

Die KR beinhaltet die Identifikation der jeweils besten Kanalantwort und deren signaltechnische Separation bei gleichzeitiger Minimierung der Intersymbol Interactions. Sie kann ihrerseits bereits eine teilweise Doppler- Kompensation einschließen, welche für eine Reihe von Anwendungen bereits ausreichen kann.

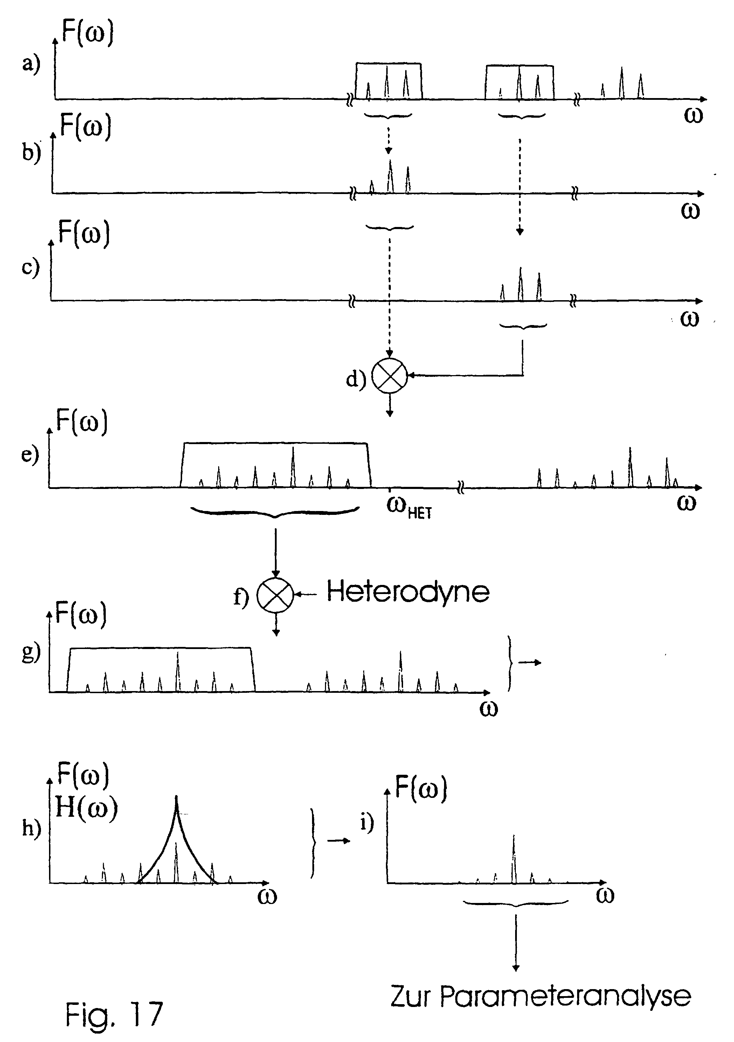

Betrachten wir nun als Beispiel den Fall, daß die Doppler-Effekte keine wesentliche Rolle spielen, der Empfang aber durch die Überlagerung diverser Kanalantworten beeinträchtigt wird. Derartige Übertragungsbedingungen sind u.a. häufig bei der akustischen Kommunikation mit oder zwischen langsam bewegten oder stationären Objekten unter Wasser anzutreffen. Jede der Signalkomponenten ist dann durch ein ganzes Spektrum von Kanalantworten repräsentiert (vergl. schematische Darstellung in Fig. 5 und Fig. 17a). Das anmeldungsgemäße Verfahren zur Signalverarbeitung muß nun vor allem gewährleisten, daß die Intersymbol Interactions minimiert werden.

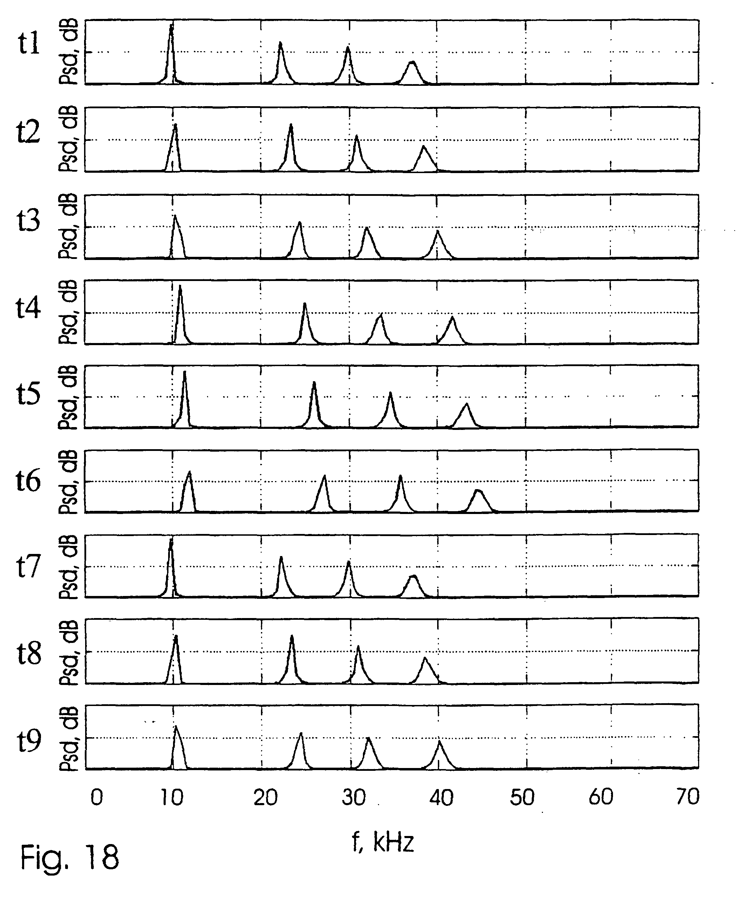

Obwohl im Ergebnis der VMT die diversen Kanalantworten mit unterschiedlichen Frequenzen beim Empfänger eintreffen, ist es in der Praxis kaum möglich, gleich im ersten Schritt für jede Komponente die jeweils günstigste Kanalantwort aus dem betreffenden Spektrum herauszufiltern, da diese meist sehr dicht beieinander liegen und die Frequenzen nicht feststehen (vergl. Fig. 18). Auch mitlaufende Bandpaßfilter können schwerlich genügend scharf dafür eingestellt werden. Eingangs hatten wir jedoch vorausgesetzt, daß es möglich sein muß, die entsprechenden Spektren der Bezugs- und Informationskomponenten voneinander zu trennen (Fig. 17b und Fig. 17c).

Nach Multiplikation der Bezugskomponente mit der jeweilige Informationskomponente (Fig. 17d) erhält man jeweils zwei Spektren von Zwischenfrequenzen, die unterschiedlich hoch liegen und unterschiedlich schnell laufen (Fig. 17e). Es bietet sich an, das jeweils niedrigere Frequenzband z.B. mittels eines Low-Pass-Filters für die weitere Bearbeitung herauszufiltern. In diesem Anteil sind mögliche Doppler- Effekte reduziert, während sie in dem anderen Spektralanateil verstärkt werden. Falls das zweite Seitenband nicht stört, weil beispielsweise genügend Rechenkapazität vorhanden ist, kann es auch mitgeführt werden, d.h. die Filterstufe kann eingespart werden.

Im nächsten Bearbeitungsschritt wird das zumindest eine verbliebene Frequenzband mit einer systeminternen generierten Hilfsfrequenz multipliziert (Fig. 17f), deren Charakteristik so gewählt wird, daß im Ergebnis der Multiplikation der eine Anteil der zweiten Zwischenfrequenzen fest steht, d.h. sich diese betreffenden Frequenzen zeitlich nicht mehr ändern (Fig. 17g).

Die Charakteristik der jeweiligen Hilfsfrequenz (H1; H2; ... HN) ergibt sich entweder aus der zwischen Sender und Empfänger festgelegten oder operativ vereinbarten Abstimmung hinsichtlich der für die Informationsübertragung verwendeten Signalstruktur oder sie wird im Rahmen einer im Vorfeld der Informationsübertragung durchgeführten Sondierung des Übertragungskanals (Kanaltraining siehe unten) bestimmt.

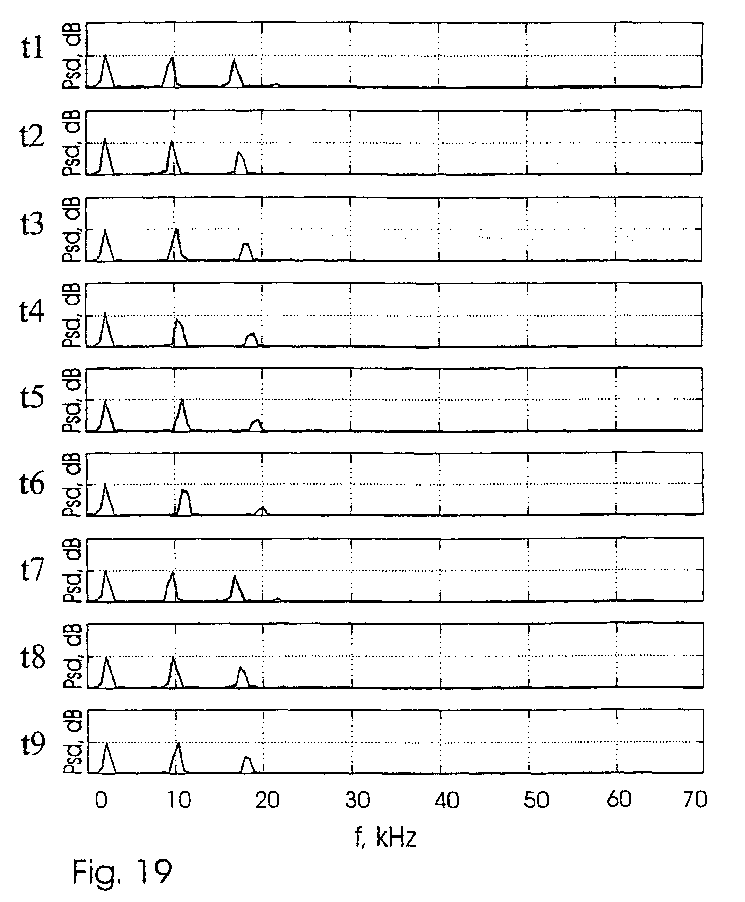

Fig. 19 veranschaulicht, daß diese Stufe auch dann erreicht werden kann, wenn zunächst nur die Bezugskomponente von den Informationskomponenten getrennt werden konnte. Durch geeignete Wahl der Heterodynefrequenz kann dann die Frequenz der jeweils zur Bearbeitung vorgesehenen Informationskomponente (im vorliegenden Beispiel die erste) stabilisiert werden.

Ein Vorteil dieser Vorgehensweise besteht darin, daß mittels geeigneter Heterodynfrequenzen die gewünschten Anteile der stabilen Zwischenfrequenzen stets in einem definierten Fenster plaziert und somit mittels eines feststehenden Filters, beispielsweise eines Low-Pass-Filters optimal herausgefiltert werden können (Fig. 17h).

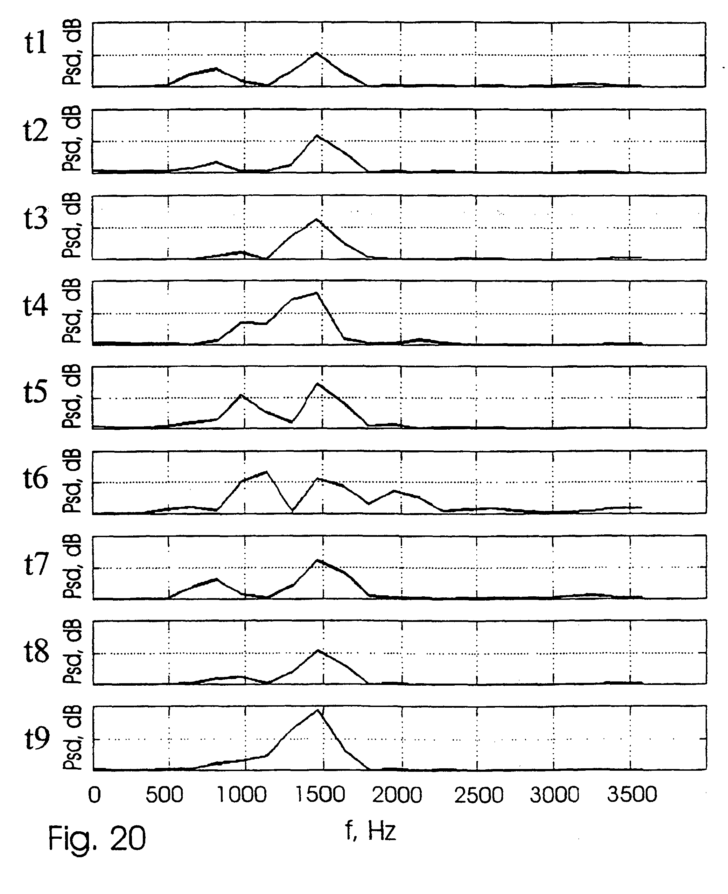

Fig. 20 soll an einem praxisnahen Beispiel mit einer Vielzahl von Kanalantworten veranschaulichen, daß jedoch anhand eines solchen Spektrums stabiler Zwischenfrequenzen noch keine verläßlichen Aussagen z.B. über die Phasenlage zu machen sind, da die diversen Kanalantworten zu unterschiedlichen Zeiten verschieden stark repräsentiert sein können.

Deshalb wird nunmehr eine zweite Filterstufe eingefügt, bei der im Prozeß eines vorangegangenen Kanaltrainings (Beschreibung siehe weiter unten) für jede Komponente bestmögliche Trennschärfe für die insgesamt stärkste Kanalantwort eingestellt wurde. Die gepunktete Linie in Fig. 17h soll zeigen, daß die Flanken dieser Filter sehr steil eingestellt werden können. Folglich können die Einflüsse der übrigen Kanalantworten auf die bestmögliche Weise minimiert werden (Fig. 17i).

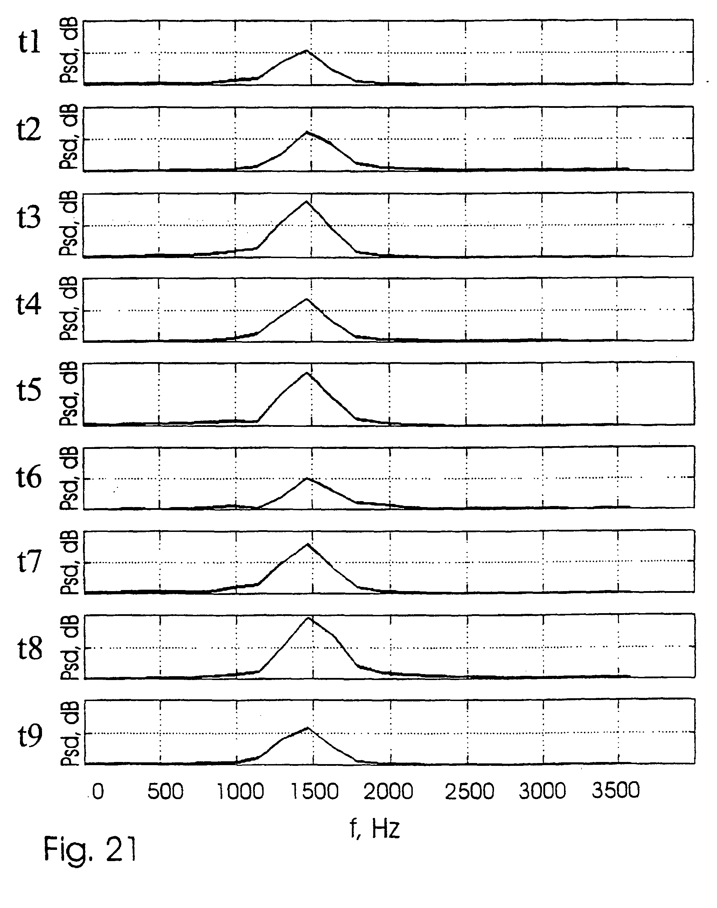

Fig. 21 veranschaulicht für das praxisnahe Beispiel, daß im Ergebnis einer solchen scharfen Filterung aus der Vielzahl der in Fig. 20 noch fluktuierenden Kanalantworten eine eindeutige Auswahl getroffen und der Einfluß der übrigen Anteile unterdrückt werden kann. Der gesamte, in diesem Zusammenhang beschriebene Prozeß sei als Kanalreinigung mit teilweiser Doppler- Kompensation bezeichnet.

Parameterbestimmung:

Die solchermaßen aufbereiteten und von störenden Kanaleinflüssen weitestgehend bereinigten Signalkomponeten können nunmehr einer detaillierten Parameteranalyse unterzogen werden. Dabei lassen sich sowohl die Amplituden als auch die Phasen der informationstragenden Signalanteile mit größtmöglicher Genauigkeit und Reproduzierbarkeit ermitteln. Verschiedene Amplitudenwerte können z.B. auf einfache Weise mittels Schwellwertschalter unterschieden werden. Falls zur Bestimmung der Phasenwinkel eine C-S- Projektion durchgeführt werden soll, können ggf. zur Komponentenzerlegung erforderliche Referenzschwingungen (bzw. deren Sinus- und Cosinusanteile) künstlich generiert werden. Letzteres ist technisch kein Problem, da dem System die Einstellungen der letzten (scharfen) Filterstufe und damit die Frequenzen der informationstragenden Signalanteile bekannt sind. Je nach verwendeter Codierungsform können aber auch vom Anwender aus dem breiten Repertoire der bekannten Algorithmen die jeweils am besten geeigneten ausgewählt und eingesetzt werden.

In der oben beschriebenen Form kann die KR vorzugsweise in Verbindung mit einer pVMT (vergl. Fig. 5) eingesetzt werden. Sie läßt sich aber auch problemlos an die paVMT (vergl. Fig. 15) anpassen. Im Fall der paVMT führt die Multiplikation von Bezugs- und Informationskomponente unmittelbar zu stehenden Zwischenfrequenzen, so daß sich ggf. die Multiplikation mit Hilfsfrequenzen erübrigt. Sollte ein solcher Zwischenschritt dennoch zweckmäßig sein, beispielsweise um das betreffende Frequenzband in ein bestimmtes Filterfenster zu schieben, so kann dieses leicht durch Multiplikation mit jeweils einer konstanten Hilfsfrequenzen geschehen. Das liegt aber im Spielraum der obigen Beschreibung.

Die KR ist somit grundsätzlich für alle Formen der VMT geeignet, bei denen der Gradient der aktiv erzeugten Frequenzänderung ungleich Null ist. Um die hier beschriebene Variante von den nachfolgenden Modifikationen zu unterscheiden, sei sie mit KR1 bezeichnet. Die hier beschriebene vorteilhafte Ausführungsform des anmeldungsgemäßen Verfahrens bildet die Grundlage des Anspruchs 18. Die wichtigsten Elemente dieses grundlegenden Verfahrens sind nochmals in der Übersicht in Fig. 23 dargestellt.

Die oben beschriebene Variante der KR kann beispielsweise dergestalt modifiziert werden, daß die Bezugs- und Informationskomponente zunächst nicht miteinander multipliziert werden. In diesem Fall erfolgt die Bildung stabiler Zwischenfrequenzen direkt in einem Schritt durch Multiplikation der jeweiligen Signalkomponente mit einer jeweils geeigneten Hilfsfrequenz. Diese Vorgehensweise bringt den Vorteil, daß die Spektren der stabilen Zwischenfrequenzen nicht mehr Anteile haben, als die Empfangskomponenten. Nach dem Herausfiltern der für jede Komponente jeweils besten Kanalantwort (Kanalreinigung) besteht dann immer noch die Möglichkeit, den jeweiligen informationstragenden Signalanateil mit der Referenz zu verarbeiten, um zumindest eine teilweise Doppler- Kompensation zu erreichen, bzw. um, analog zu dem bei der vDK beschriebenen Beispiel, eine Phasenwinkelbestimmung mittels C-S- Projektion der informationstragenden Komponente auf die Kosinus- und Sinus - Quadratur- Komponenten des gereinigten Bezugssignals durchzuführen. Die entsprechende Frequenzanpassung der Referenz kann, falls erforderlich, entweder im Zuge der Multiplikation mit einer geeigneten Hilfsfrequenz erfolgen, oder nach Abschluß der letzten Filterstufe durch Multiplikation mit jeweils einer geeigneten konstanten Hilfsfrequenz. Im zweiten Fall braucht die Referenzkomponente nur einmal durch die Filter zu laufen.

Mit den im vorangegangenen Absatz beschriebenen Modifikationen ergibt sich eine weitere vorteilhafte Ausführungsform. Der schematisch vereinfachte Ablaufplan wurde in der Übersichtsdarstellung (Fig. 23) als KR2 bezeichnet.

Falls Doppler- Effekte aber gar keine Rolle spielen, kann die Bezugskomponente auch ganz weggelassen oder als zusätzliche Informationskomponente verwendet werden. Dann ist ohnehin nur KR2 anwendbar. Die Parameterbestimmung muß dann allerdings wieder analog zu der bei KR1 beschriebenen Vorgehensweise erfolgen.

Der Vollständigkeit halber sei hier auch nochmals auf die eingangs beschriebene jedoch nicht bildlich dargestellte Alternativlösung verwiesen, bei der beispielsweise im Rahmen der pVMT die Stufe der stabilen Zwischenfrequenzen auch ohne vorherige Trennung der Komponenten lediglich durch Multiplikation der in aufeinander folgenden Takten empfangenen Signale erreicht werden kann. Dieser Schritt beinhaltet ebenfalls eine teilweise Dopplerkompensation. Als Besonderheit ergibt sich in diesem Fall, daß je nach Frequenzhub dann die Spektren der stabilen Zwischenfrequenzen der betreffenden Kanäle in separaten, jedoch mehr oder weniger dicht benachbarten Fenstern liegen. Allerdings erhält man im Ergebnis einer solchen Transformation eine sehr komplexe Signalstruktur. Insbesondere wenn eine größere Anzahl an Informationskanälen verwendet wird, muß sorgfältig auf die Vermeidung eventueller Überlagerungen der Kreuzprodukte geachtet werden. Zur Trennung der Kanalantworten kann dann beispielsweise eine Kaskade von scharfen Filtern eingesetzt werden.

Abschließend sei nochmals darauf hingewiesen, daß mit der Beschreibung der Filtersysteme lediglich das Grundprinzip der Vorgehensweise veranschaulicht werden soll. In der Praxis ist es durchaus denkbar, auch komplexere Methoden der Signalbearbeitung und Singnalanalyse einzusetzen, welche die hier beschriebenen Arbeitschritte in ähnlicher oder anderer Form implizieren. Das Prinzip bleibt in jedem Fall gleich.

Komplettlösungen:

Nachdem zunächst die verfahrenstechnischen Grundlagen für die vollständige Doppler- Kompensation und verschiedene Varianten der Kanalreinigung (z.T. inklusive einer teilweisen Doppler- Kompensation) separat beschrieben wurden, sei nun ein Anwendungsfall betrachtet, bei dem der Empfang sowohl durch diverse Kanalantworten als auch durch starke Doppler- Effekte beeinträchtigt ist. Eine solche Kombination von Störgrößen erschwert z.B. häufig die Kommunikation mit bzw. zwischen bewegten Objekten unter Wasser.

Für diesen Fall besteht eine Lösungsmöglichkeit beispielsweise darin, vDK und KR2 miteinander zu kombinieren:

Nach Trennung von Bezugs- und Informationskomponente wird zunächst, wie bei der vDK beschrieben, ein paarweiser Doppler- Abgleich durchgeführt, indem zumindest eine der paarweise zu betrachtenden Signalkomponenten, ggf. auch beide auf geeignete Weise so transformiert wird bzw. werden, daß beide exakt den selben Frequenzgang aufweisen, somit gleich stark Doppler- belastet sind. Optional können die jeweils nicht benötigten Seitenbänder weggefiltert und die verbliebenen Signalanteile wieder normiert werden.

Danach werden beide Komponenten separat durch Multiplikation mit typischerweise der selben Hilfsfrequenz (die den gleichen Anstieg wie die betreffenden Komponenten hat, jedoch etwas parallel verschoben ist) multipliziert, somit in stabile Zwischenfrequenzen überführt und dann jeweils separat den nachfolgenden Filterstufen zur Kanalreinigung unterzogen. Dazu können die scharfen Filter ggf. für jede Komponente individuell eingestellt werden. Im Idealfall können die betreffenden Filtereinstellungen auch bei der Feinabstimmung der o. g. Hilfsfrequenzen berücksichtigt werden.

Im Ergebnis erhält man sowohl für die Informationskomponente als auch für die Referenz jeweils ein von Intersymbol Interactions weitestgehend bereinigtes Signal. Nach dieser "Reinigung" (ggf. inklusive Schwellwertanalyse) kann die Parameterbestimmung dann z.B. entsprechend der bei der vDK bzw. KR2 beschriebenen Vorgehensweise erfolgen, wobei mittels der paarweisen Bearbeitung der jeweiligen Informationskomponente mit der dazugehörigen Referenz die vollständige Doppler- Kompensation erreicht wird.

Die oben beschriebene Ausführungsform des anmeldungsgemäßen Verfahrens bildet die Grundlage für die vorteilhafte Ausführungsform des Verfahren gemäß Anspruch 8. In der schematisierten Übersicht in Fig. 23 wurde sie mit Kompl.1 bezeichnet.

Eine weitere Lösungsmöglichkeit besteht in einer geeigneten Kombination von vDK und KR1 (vergl. vereinfachte Darstellung des Ablaufplanes Kompl.2 in Fig. 23):

Auch in diesem Fall erfolgt nach der Trennung von Bezugs- und Informationskomponente zunächst der paarweise Doppler- Abgleich. Danach wird eine der beiden Komponenten durch Multiplikation mit einer in diesem Fall jedoch konstanten, im System generierten Hilfsfrequenz um einen geeigneten Betrag parallel verschoben. Anschließend werden beide Partnerkomponenten miteinander multipliziert, womit die in Fig. 17g dargestellte Bearbeitungsstufe, d.h. die Ebene der stabilen Zwischenfrequenzen erreicht wird. Danach wird das Verfahren mit den beiden Filterstufen und der Parameterbestimmung gemäß KR1 fortgesetzt.

Diese zweite Komplettlösung beinhaltet, daß durch die Projektion der Informationskomponente auf die Doppler- identische Referenz die Einflüsse von durch Bewegungen hervorgerufenen Frequenzverschiebungen vollständig eliminiert werden. Damit ist die Referenz jedoch "aufgebraucht". Sie wird aber auch nicht mehr benötigt. Ein wesentlicher Vorteil dieser Vorgehensweise besteht darin, daß systemintern lediglich jeweils eine konstante Hilfsfrequenz generiert zu werden braucht, um das gewünschte Seitenband der stabilen Zwischenfrequenzen exakt in das für die Filterung optimale Frequenzfenster einzuordnen. Im günstigsten Fall könnte möglicherweise für alle Komponentenpaare auch ein und dieselbe Hilfsfrequenz verwendet werden. Im Prinzip besteht die Möglichkeit, diese Hilfsfrequenz im Anschluß an die "Reinigung" auch als Referenz für die Phasenanalyse zu nutzen. Da man in der Praxis jedoch versuchen wird, die scharfen Filter individuell für jede Signalkomponente (die im vorliegenden Fall bereits eine entsprechend aufbereitete Kombination aus der jeweiligen Info- und Bezugskomponente verkörpert) einzustellen, die Filtereinstellungen dem System somit bekannt sind, können problemlos systemintern auch exakt darauf abgestimmte Referenzen (inklusive der Sinus- und Kosinus - Quadratur-Komponenten) künstlich erzeugt werden, falls diese für die Phasenanalyse benötigt werden (vergl. KR1).

Kanaltraining und Kanal- Tuning:

Mittels des bereits mehrfach erwähnten Kanaltrainings ist anhand von geeigneten Testsignalen zunächst sicherzustellen, daß Signalstruktur möglichst optimal an die jeweiligen Übertragungsbedingungen angepaßt ist und / oder das zumindest gewährleistet wird, daß der Empfänger stets im erforderlichen Maße die Komponententrennung vornehmen kann. Wenn diese Voraussetzung erfüllt ist, kann das für das Verfahren nach Anspruch 1 sowie auch für alle weiteren Varianten, die eine Kanalreinigung enthalten, unbedingt zu empfehlende Kanal-Tuning durchgeführt werden. Dazu bietet es sich an, etwas längere, Signale ohne Codierung zu senden, welche im übrigen aber bereits die zur Informationsübertragung vorgesehene Charakteristik besitzen. Hierbei liegt es im Ermessen des Anwenders, ob alle Frequenzkanäle gleichzeitig verwendet werden, oder ob das Kanal-Tuning anhand von Testsignale durchgeführt wird, die nacheinander jeweils eine Bezugskomponente und eine oder mehrere Informationskomponente(n) enthalten. Die jeweilige Vorgehensweise muß natürlich auf die entsprechend ausgewählte Variante des Signalbearbeitungsverfahren abgestimmt sein. Die empfange-nen Testsignale durchlaufen nun alle in der betreffenden Variante vorgesehenen Bearbeitungsstufen bis zur Bildung der stabilen Zwischenfrequenzen. Auf dieser Ebene wird für jede der zur Auswertung vorgesehenen Signalkomponente (bzw. aus der jeweiligen Informations- und Bezugskomponente gebildeten Mischkomponente) individuell eine Analyse der Energiedichteverteilung in dem gegebenen Frequenzspektrum durchgeführt. Für eine solche Analyse kann beispielsweise eine FFT angewendet werden. Anhand dieser Auswertungsergebnisse wird dann die jeweils am besten geeignete Kanalantwort (typischerweise die energiereichste) ausgewählt, für die nunmehr die jeweils bestmöglich Einstellung der "scharfen" Filter vorgenommen und abgespeichert wird. Nachdem die betreffenden Einstellungen für alle Komponenten festgelegt sind, kann die eigentliche Informationsübertragung beginnen. Die Filtereinstellungen werden dann bis zum nächsten KanalTuning beibehalten.

Speziell bei der akustischen Datenübertragung unter Wasser sind die Übertragungsbedingungen oftmals nicht zeitlich stabil. In solchen Fällen bietet es sich an, zumindest das Kanal- Tuning in geeigneten Zeitabständen zu wiederholen, d.h. die Einstellungen der scharfen Filter regelmäßig zu aktualisieren.

Die Verwendung längerer uncodierter Signale für das Kanal- Tuning bietet eine gute statistische Sicherheit, bedeutet aber, daß zwischenzeitlich die Informationsübertragung kurz unterbrochen werden muß. Solche Unterbrechungen lassen sich ggf. aber vermeiden. Eine vorteilhafte Alternative biete das Verfahren nach Anspruch 23. Dabei wird während der Informationsübertragung operativ, d.h. anhand der fortlaufend empfangenen Signale, parallel zu dem eigentlichen Signalbearbeitungsprozeß oder als Bestandteil desselben eine fortlaufende Aktualisierung der genannten Filtereinstellungen und somit ein fortlaufendes Kanal-Tuning durchgeführt. Dazu ist es zweckmäßig, die Empfangsergebnisse aus mehreren Takten in die Auswertung einzubeziehen. Eine solche Alternativlösung stellt natürlich entspre-

chend höhere Anforderungen an das Auswertungssystem.

Bestimmung der Relativgeschwindigkeit zwischen Sender und Empfänger:

Abschließend sei noch kurz dargestellt, daß aus dem Empfangssignales eine möglicherweise hilfreiche Aussage hinsichtlich der aktuellen Abstandsänderung zwischen Sender und Empfänger abgeleitet werden kann. Die Signalbearbeitung nach den oben beschriebenen Verfahren zielt darauf ab, für jede Signalkomponente auf bestmögliche Weise die (Sende-) Parameter (u.a. die Phasenwinkel) zu rekonstruieren. Dazu war es zweckmäßig, die Komponenten so miteinander zu verarbeiten, daß die Doppler- Anteile eliminiert werden. Letztere wurden als Störgrößen behandelt. Diese Doppler- Anteile enthalten aber in Form des Doppler-Koeffizienten D = v /c (vergl. Gl. 4 und 5) eine Information, die zwar nichts mit der eigentlichen Datenübermittlung zu tun hat, jedoch Aufschluß über die momentane Relativgeschwindigkeit zwischen Sender und Empfänger v geben kann. Der Doppler- Koeffizient kann mittels geeigneter Methoden der Signalbearbeitung bestimmt werden. Da sich die Geschwindigkeit der Signalausbreitung c in etwa bekannt ist, bzw. im Rahmen der Kanalsondierung gemessen werden kann, läßt sich v abschätzen bzw. auch relativ genau bestimmen.

Als Beispiel sei hier ein möglicher Lösungswege skizziert:

Dazu kann eine beliebige Empfangskomponente (zweckmäßigerweise z.B. die uncodierte Bezugskomponente) herausgegriffen werden. Falls erforderlich, kann diese nochmals extra entsprechend KR2 auf eine Kanalantwort reduziert werden. Da dem Empfänger die vom Sender verwendete Signalstruktur bekannt ist und sich mittels der Signalanalyse nach einem der o. g. Verfahren auch die Phasenlage bestimmen läßt, kann nun systemintem ein amplitudennormiertes Referenzsignal generiert werden, das hinsichtlich seiner Phasenlage und Frequenzcharakteristik - mit Ausnahme des Doppler- Anteils, welcher ja noch nicht bekannt ist - der betreffenden Empfangskomponete gleicht. Nach Projektion der Empfangskomponente auf die Sinus- und Kosinus- Quadratur- Komponenten dieser Referenz und Filtern (LPF) erhält man jeweils den reinen Doppler- Anteil in Form von einfachen Sinus- und Kosinus- Schwingungen gleicher Amplitude. Die arctan- Funktion liefert das Argument $D\omega nt_s$. Da $\omega nt_s$ bekannt ist, ergibt die Division D, und D multipliziert mit c schließlich v. (Schematisierter Ablaufplan siehe Doppler- Best in Fig. 23)

Es dürfte für viele Anwendungen vorteilhaft sein, diese wertvolle Zusatzinformation ohne zusätzlichen Meßaufwand bekommen zu können.

Weiterhin sei vermerkt, daß die Kenntnis der Doppler- Anteile auch zur weiteren Verbesserung der eigentlichen Signalbearbeitung beitragen kann. So können, z.B. die im Rahmen der KR systemintern generierten Hilfsfrequenzen präziser auf die Struktur der jeweiligen Empfangskomponeten abgestimmt und so die bei der eigentlichen Signalanalyse unerwünschten Doppler- Einflüsse noch besser bzw. auf einfachere Weise reduziert werden. Durch die Integration solcher Maßnahmen, ggf. auch deren iterative Anwendung, kann neben einer Verbesserung der Auswertungsergebnisse zumindest zwischenzeitlich auch eine Verfahrensoptimierung erreicht werden, da sich mit Erhöhung der Doppler-Resistenz auch die möglichen Einsatzbereiche beispielsweise von KR1 und KR2 erweitern. Damit kann der insbesondere bei der Multiplikation von Empfangskomponenten mitunter unvermeidbar rasche Datenzuwachs reduziert, ggf. auf Zwischenfilter verzichtet und der Ablauf insgesamt schneller gemacht werden. Alle Vereinfachungen im Kembereich des Verfahrens kommen der online Auswertung zugute. Selbst wenn die Doppler- Auswertung zunächst einen Zusatzaufwand bedeutet, können sich möglicherweise insgesamt Einsparungen ergeben, da die Kemroutinen der Signalbearbeitung dann ggf. mit einer geringeren Hard und Softwarekapazität bewältigt werden können.

Ferner lassen sich die zuletzt genannten Verbesserungen bzw. Vereinfachungen des anmeldungsgemäßen Verfahrens zumindest zwischenzeitlich auf einfache Weise auch dann realisieren, wenn die Information über die jeweils aktuelle Doppler Verschiebung in bereits aufbereiteter Form, beispielsweise seitens eines externen Meßsystems zur Verfügung gestellt wird.

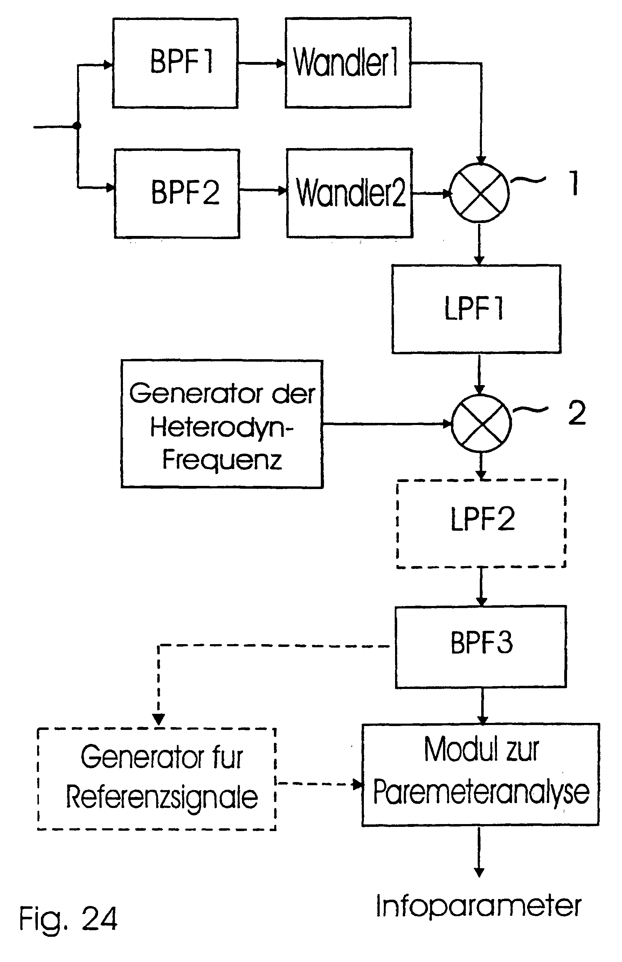

In Fig. 24 ist der Grundaufbau einer Signalbearbeitungseinheit dargestellt. Das Grundprinzip weist eine Filtereinheit auf, welche in dieser Ausführungsform aus zwei parallel geschalteten steurbaren Filterelementen BPF1 und BPF2 besteht, die das Empfangssignal in Bezugs- und Informationskomponente teilen.

Diese beiden Signalanteile werden dann gemäß dem Mittel zur Frequenzumwandlung zunächst einer Wandlereinheit bestehend aus Wandler1 und Wandler2 zugeführt, in der ein paarweiser Doppler- Abgleich erfolgt, bevor dann beide Anteile mittels des Multiplikators 1 vereint werden, um später durch Multiplikator 2 mittels einer geeigneten, von einem Generator gelieferten Hilfs- bzw. Hetrodynefrequenz in stehende Zwischenfrequenzen überführt zu werden.

Als Mittel zur Unterdrückung von Störanteilen dienen in dieser Ausführungsform zunächst das Filter LPF1 und ggf. auch ein zweites Filter LPF2, welche jeweils in Reihe den Multiplikatoren nachgeschaltet sind und nicht benötigte Seitenbänder weg filtern. Danach erfolgt mittels des in Reihe geschalteten scharfen Filters BPF3 die Auslese des jeweils am besten geeigneten Signalanteils, welcher anschließend an das Mittel zur Parameteranalyse, in dieser Ausführungsform ein Modul zur Parameteranalyse, weitergeleitet wird. Falls erforderlich, kann das Modul zur Parameteranalyse durch einen Generator für Referenzsignale ergänzt werden, der mit BRF3 in Verbindung steht.

Am Ende der Verarbeitungseinheit werden dann für jede Informationskomponenten die zur Codierung verwendeten Signalparameter ausgegeben.

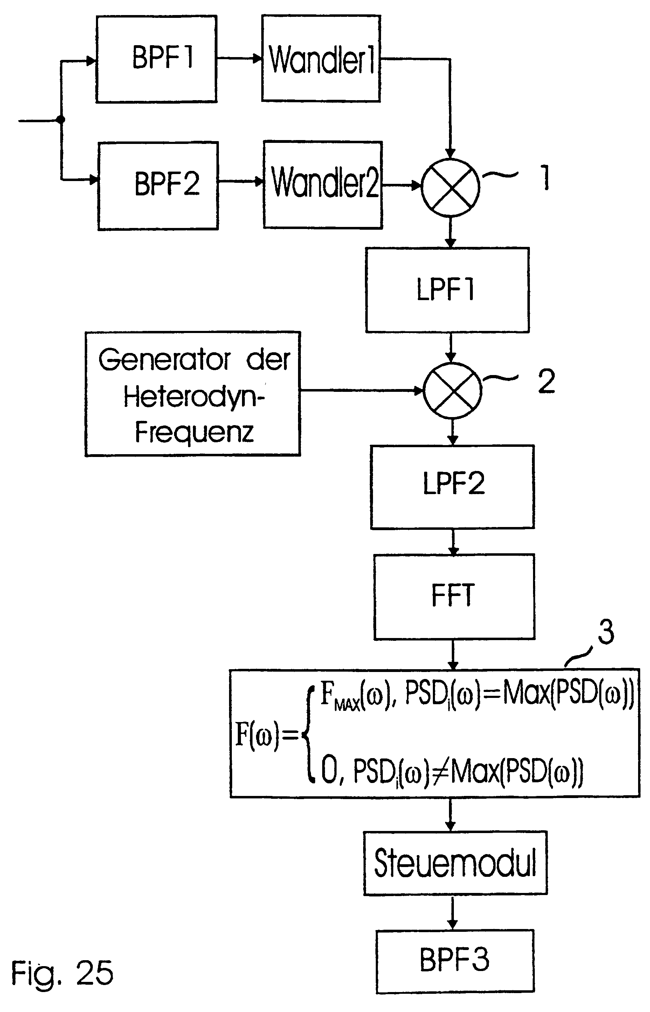

Fig. 25 zeigt einen Grundaufbäu für das im gleichen Kontext vorteilhaft einzusetzende Kanal- Tuning. Im Unterschied zu Fig. 24 werden in dieser Ausführungsform die Signalkomponenten im Anschluß an LPF2 an das Mittel zum Tunen geleitet, bei welchem hier eine FFT- Einheit das Modul zur Analyse von Frequenzspektren und die mit 3 bezeichnete Einheit die Auswertungseinheit bilden. Das Ergebnis wird dann dem Steuermodul zugeführt, das die jeweils optimalen Filtereinstellungen für BPF3 vornimmt.

Im folgenden werden weitere Möglichkeiten bzw. Anwendungen des anmeldungsgemäßen Verfahrens und des anmeldungsgemäßen Systems detailliert beschrieben.

Als weitere Option können in diesem Verfahren bei Verringerung des Abstandes zwischen Sender und Empfänger problemlos zusätzlich auch andere, zwischen den ursprünglichen Frequenzkanälen liegende bzw. auch höhere Frequenzkanäle genutzt oder das gesamte Spektrum in Richtung höherer Frequenzen verschoben werden. Dabei kann man sich den Effekt zunutze machen, daß mit Verringerung der Übertragungsdistanz in der Regel auch die Störeinflüsse zurückgehen. Dazu brauchen Sender und Empfänger nur für ein entsprechend breites Frequenzspektrum ausgelegt und mit der Fähigkeit ausgestattet zu werden, auch ihre Codierer entspreched umzustellen. Seitens des Empfängers kann die Erkennung eventuell neu hinzugekommener Frequenzen entweder automatisch erfolgen, oder der Wechsel zu einem neuen Arbeitsregime wird ihm vom Sender in einer geeigneten Weise (z.B. mit dem letzten Informationspaket) mitgeteilt. Die einzelnen Tonkanäle müssen jedoch soweit auseinander liegen, daß sie unter den jeweiligen Übertragungsbedingungen gut vom Empfänger unterschieden werden können. Umgekehrt kann die Vergrößerung der Distanz eine Verschiebung des gesamten Spektrums zu niedrigeren Frequenzen oder die Aufgabe der oberen Kanäle bzw. auch (insbesondere bei zunehmenden Störeinflüssen) eine Vergrößerung der Abstände zwischen den Kanälen durch proportionales Auseinanderziehen oder Auslassen von Zwischenstufen erforderlich machen.

Die in der Grundvariante des Verfahrens vorgesehene Auswahl der Frequenzbänder dergestalt, daß die Töne bzw. Frequenzen konsonieren oder ganzzahlige Vielfache (Obertöne) des Tones mit der niedrigsten Frequenz sind, zielt auf die Erreichung einer energetisch günstigen Konstellation ab.

Bei der Verwendung von harmonischen Frequenzreihen ergibt sich außerdem die Möglichkeit nichtlineare Effekte der Schallausbreitung zu nutzen und so eine Signalübertragung über größere Distanzen zu erreichen. Schallwellen sind Longitudinalwellen, bei denen sich Abschnitte mit höherer und niedrigerer Dichte abwechseln. Da die Schallgeschwindigkeit aber u.a. von der Dichte des Mediums abhängt, pflanzen sich die verdichteten Anteile schneller fort. Die Flanken einer ursprünglichen Sinusschwingung werden allmählich asymmetrisch, d.h. die Sinusschwingung verformt sich mehr und mehr in Richtung etwa einer Sägezahnschwingung. Physikalisch bedeutet das einen Energietransfer zu den Obertönen. Im Wasser ist dieser Effekt erst nach einigen Kilometern Weglänge spürbar. Sendet man gleichzeitig mit dem Grundton z.B. ein oder mehrere Obertöne aus, so erhalten diese aufgrund der Harmoniebeziehung durch die besagten nichtlineare Effekte zusätzliche Energie von den jeweils tieferen Tönen. In der Konsequenz werden sie nicht so schnell gedämpft, sie bleiben länger über dem Niveau des Grundrauschens und erreichen somit eine größere nutzbare Reichweite. Da die die Reichweite des Gesamtsystems in erster Linie durch die des jeweils höchsten Frequenzbandes bestimmt ist, ergibt sich insgesamt ein größerer Senderadius. Dazu ist es zweckmäßig, den Grundton permanent und diesen, wie nach Möglichkeit auch alle anderen Töne, mit hoher Energie zu senden.

Aufgrund der großen Variabilität des Systems können möglicherweise auch noch andere Eigenschaften der Übertragungsstrecke genutzt werden. Häufig bilden sich z.B. infolge schichtweiser Inhomogenitäten des Wassers bestimmte Übertragungskanäle aus, die ein eigenes Schwingungsverhalten besitzen. Je nach den betreffenden Eigenwerten können hier leicht verschiedene Moden angeregt werden, die zwar in der Regel relativ niedrige Frequenzen haben, dafür aber sehr weit tragen. Prinzipiell besteht die Möglichkeit, die Frequenzbänder des Übertragungssystems auf diese Moden abzustimmen. Darüber müssen sich Sender und Empfänger jedoch auf geeignete Weise verständigen.

Falls die Relativgeschwindigkeit zwischen Sender und Empfänger so gering ist, daß Doppler-Effekte vernachlässigbar sind, können als Alternative zu der o. g. proportionalen FGM auch geeignete, für das gesamte System einheitliche Frequenzveränderungen durchgeführt werden. In diesem Fall wird gewissermaßen eine "OffsetKurve", oder bildlich gesprochen eine "Melodie" vorgegeben bzw. operativ nach Analyse der jeweiligen Übertragungsbedingungen bestimmt, und additiv allen Frequenzkanälen hinzugerechnet (vergl. Fig. 4). Diese Methode wird als parallele FGM bezeichnet. Die Besonderheit dieser Methode besteht darin, daß sich infolge Parallelverschiebung für alle Frequenzkanäle stets der gleiche Gradient, d.h. die gleiche Driftgeschwindigkeit ergibt, womit im Idealfall über das gesamte Spektrum eine optimale Trennung der eigentlichen Signale von den Störkomponeten erreicht werden kann. Das solchermaßen modifizierte Verfahren hat zudem den Vorteil, das sich das Frequenzspektrum nicht mit dem Ansteigen der Bezugsfrequenz aufspreizt. Aufgrund der stärkeren Bündelung laufen die oberen Töne dann nicht so leicht in Gefahr, in Frequenzbereiche mit zu geringem Ausbreitungsradius zu geraten und somit abgeschnitten zu werden. Damit können die in Sinne der Informationsübertragung schnelleren oberen Frequenzbereiche besser ausgenutzt werden. Die parallele FGM läßt sich vielleicht auch praktisch leichter realisieren, da oftmals die Transducer nur in einem jeweils begrenzten Frequenzband arbeiten können und auch die Verwendung von entsprechenden Wandler-Kaskaden nicht immer möglich ist.

Selbstverständlich muß auch bei der parallelen FGM dem Empfänger in einer geeigneten Form mitgeteilt werden wie er die einzelnen Frequenzkanäle in Bezug zum GT anstimmen soll. Prinzipiell dürfte aber auch das Umschalten zwischen proportionaler FGM und paralleler FGM kein Problem sein, da dies hinsichtlich der Bestimmung der Frequenzen der Informationsfrequenzkanäle in Bezug zum GT lediglich einen Wechsel zwischen Multiplikation und Addition beinhaltet.

Falls die Phasensprünge an den Taktübergängen Probleme bereiten sollten, kann die eingangs beschriebene taktbezogene Amplitudenmodulation verwendet werden. Eine weitere Methode zur Minimierung von Störeinflüssen besteht darin, ein Codierungsverfahren zu verwenden, das auf den Informationskanälen das Vorhandensein eines Tones in zwei aufeinanderfolgenden Takten ausschließt. Der gleiche Effekt kann auch durch Multiplexen, z.B. den abwechselnden Betrieb der geraden und ungeraden Informationskanäle erreicht werden. Daß neben diversen anderen Parametern auch die frequenzbezogene Geschwindigkeitscharakteristik des jeweiligen Übertragungskanals durch spezielle Sondierungen oder im Prozeß der wechselseitigen Kommunikation ermittelt und bei der Signalgenerierung berücksichtigt werden kann und auch sollte, versteht sich von selbst.

Es ist ferner denkbar, daß der Bezugsfrequenzkanal bei Bedarf und sofern es die speziellen Übertragungsbedingungen zulassen als zusätzlicher Informationskanal verwendet wird.

**Patentansprüche**

1. Verfahren zur Übertragung von Information, bei dem zumindest ein aus einer Bezugskomponente (BK) und zumindest einer Informationskomponente (I1; I2; .... ; IN) bestehendes Informationssignal (IS) erzeugt wird, wobei

   - die Bezugskomponente während der Übertragung eine Frequenzveränderung aufweist, und
   - die Bezugskomponente (BK) und die Informationskomponente (I1; I2; ... ; IN) jeweils diskrete Zustände zur Bereitstellung eines Bitmusters ausbilden, **dadurch gekennzeichnet, dass**
   - die Frequenzänderung zeitlich kontinuierlich ist.

2. Verfahren nach Anspruch 1, bei dem sowohl die zumindest eine Bezugskomponente als auch die zumindest eine Informationskomponente während der Übertragung eine zeitlich kontinuierliche Frequenzveränderung aufweisen und zwischen den Bezugs- und Informationskomponenten ein definierter Frequenzabstand festgelegt ist.

3. Verfahren gemäß Anspruch 2, bei dem der Frequenzabstand zeitlich konstant oder zeitproportional veränderlich ist.

4. Verfahren nach einem der Ansprüche 1 bis 3, bei dem die Frequenz zumindest einer Komponente in einem Übertragungsintervall kontinuierlich zunimmt.

5. Verfahren nach einem der Ansprüche 1 bis 4, bei dem die Frequenz zumindest einer Komponente in einem Übertragungsintervall kontinuierlich abnimmt.

6. Verfahren nach einem der Ansprüche 1 bis 5, bei dem sich die Bereiche, in denen die Frequenzen variiert werden, d. h. die Frequenzbänder von zwei oder mehreren Komponenten überlappen.

7. Verfahren nach einem der Ansprüche 1 bis 6, bei dem zumindest eine der Komponenten Bezugskomponente (BK) oder Informationskomponente (I1; I2; ... ; IN) in einem separaten Frequenzband liegt.

8. Verfahren nach einem der Ansprüche 1 bis 7, bei dem das Bitmuster durch Variation der Frequenz, der Amplitude des Phasenwinkels, oder der dynamischen Phasencharakteristik in einem gegebenen Zeittakt, festgelegt wird.

9. Verfahren nach einem der Ansprüche 1 bis 8, bei dem sich das Bitmuster innerhalb eines Zeittaktes ändert.

10. Verfahren nach einem der Ansprüche 1 bis 9, bei dem sich die Anzahl der Informationskomponenten (I1; I2; ... ; IN) in Abhängigkeit des Übertragungsweges ändert.

11. Verfahren nach einem der Ansprüche 1 bis 10, bei dem die Bezugskomponente (BK) als zusätzliche Informationskomponente (IN+1) genutzt wird.

**12.** Verfahren nach einem der Ansprüche 1 bis 11, bei dem die Bezugskomponente (BK) und die zumindest eine Informationskomponente (I1; I2; ... ; IN) als Schallwelle oder als elektromagnetische Welle ausgebildet sind.

**13.** Verfahren nach einem der Ansprüche 1 bis 12, bei dem zur Verarbeitung des Informationssignals nach Empfang die Bezugskomponente (BK) von der zumindest einen Informationskomponente (I1; I2; ... ; IN) getrennt werden.

**14.** Verfahren nach einem der Ansprüche 1 bis 13, bei dem eine paarweise Bearbeitung der Bezugskomponente (BK) und einer Informationskomponente (I1; I2; ... ; IN) erfolgt.

**15.** Verfahren nach einem der Ansprüche 13 oder 14, bei dem die Informationskomponenten und die Bezugskomponente oder die paarweise bearbeiteten Bezugskomponenten und Informationskomponenten in stehende Zwischenfrequenzen (Z'1; Z'2; ...; Z'N+X) überführt werden.

**16.** Verfahren nach Anspruch 15, bei dem die Informationskomponenten und die Bezugskomponente oder die paarweise bearbeiteten Bezugskomponenten und Informationskomponenten durch Multiplikation mit Hilfsfrequenzen (H1; H2; ... ; H+X) überführt werden.

**17.** Verfahren nach einem der Ansprüche 1 bis 16, bei welchem, in Verbindung mit einer proportionalen Veränderung der Frequenzkanäle, stehende Zwischenfrequenzen durch die paarweise Bearbeitung des im aktuellen Zeittakt empfangenen Signals mit dem Empfangssignal eines vorangegangenen Taktes erzeugt werden.

**18.** Verfahren nach Anspruch 17, bei dem die paarweise Bearbeitung eine Multiplikation umfasst.

**19.** Verfahren nach einem der Ansprüche 17 oder 18, bei dem aus den stehenden Zwischenfrequenzen (Z'1; Z'2; ...; Z'N+X) eine Informationskomponente als Signalkomponenten ausgewählt und für eine Informationskodierung relevante Informationsparameter aus der Signalkomponente bestimmt werden.

**20.** Verfahren nach einem der Ansprüche 13 bis 18, bei dem in bestimmten Zeitabständen ein Kanal-Tuning eingefügt wird.

**21.** Verfahren nach einem der Ansprüche 14 bis 19, bei dem fortlaufend eine Identifikation der jeweils günstigsten Empfangskomponenten oder eine Aktualisierung von Filtereinstellungen anhand einer geeigneten Analyse der Spektren der stehenden Zwischenfrequenzen erfolgt.

**22.** Verfahren nach Anspruch 16, bei dem übertragungsbedingte Dopplerfrequenzverschiebungen bestimmt werden und bei der Erzeugung der Hilfsfrequenzen berücksichtigt werden.

**23.** Verfahren nach einem der Ansprüche 13 bis 22, bei dem die paarweise Bearbeitung anhand von intern generierten Komponenten mit der jeweils passenden Frequenzcharakteristik erfolgt.

**24.** Verfahren nach Anspruch 13 bis 23, bei dem jeweils

   a) die Bezugskomponente BK in eine transformierte Bezugskomponente BK' und die zumindest eine Informationskomponente I1; I2; ... ; IN in eine transformierte Informationskomponente I1'; I2'; ... ; IN' überführt werden; und
   b) die für die Informationskodierung relevanten Signalparameter anhand der Projektion von I1'; I2'; ... ; IN' auf die Sinus- und Kosinus-Komponenten der jeweiligen BK' bestimmt werden.

**25.** Verfahren nach Anspruch 24, bei dem die Bezugskomponente durch geeignete Transformation in eine mit der jeweils zu bearbeitenden Informationskomponente Doppler-identische Referenzkomponente (RF) dergestalt umgewandelt wird, dass die Multiplikation der beiden Komponenten ein frequenzstabiles Signal ergibt.

**26.** Verfahren nach einem der Ansprüche 24 oder 25, bei dem

   a) die transformierte Informationskomponente (I1'; I2'; ... ; IN') mit der Referenzkomponente (RF) zur Erzeugung eines ersten Wertes (CQ) multipliziert wird;

b) die transformierte Informationskomponente (I1'; I2'; ... ; IN') mit der zeitlich abgeleiteten Referenzkomponente (RF) zur Erzeugung eines zweiten Wertes (SQ) multipliziert wird; und
c) ein Verhältnis zwischen dem ersten und dem zweiten Wert gebildet wird, um einen zeitlich invarianten Endwert zu erhalten, der nur von zeitlich invarianten Informationsparametern abhängt.

27. System zur Übertragung von Information, das zur Ausführung eines Verfahrens mit den Schritten gemäß einem der Ansprüche 1 bis 26 eingerichtet ist und eine Sendereinheit und eine Empfängereinheit umfasst, zwischen denen ein Informationssignal (IS) übermittelt wird, wobei

- die Sendereinheit ein Mittel zum Erzeugen einer Bezugskomponente (BK) und zumindest einer Informationskomponente (I1; I2; ... ; IN) aufweist, um Bitmuster bereitzustellen, und
- die Empfängereinheit ein Mittel zum Erfassen des aus zumindest einer Informationskomponente (I1; I2; ... ; IN) und einer Bezugskomponente (BK) bestehendem Informationssignals (IS), bei welchem die Bezugskomponente eine Frequenzveränderung aufweist, enthält, **dadurch gekennzeichnet, dass**
- die Sendereinheit dazu eingerichtet ist, zeitlich kontinuierliche Frequenzveränderungen der Bezugskomponente zu generieren.

28. System nach Anspruch 27, wobei die Sendereinheit:

- zumindest einen Generator zur Bereitstellung der Bezugskomponente (BK) und zumindest einer Informationskomponente;
- ein erstes Steuermodul, das mit dem Generator verbunden ist und den Frequenzverlauf festlegt;
- einen Codierer oder einen mit dem Steuermodul verbundenen Modulator zur signaltechnischen Umsetzung der Information, und
- eine Mischeinheit, die dem Generator und dem Codierer bzw. Modulator nachgeschaltet ist, aufweist.

29. System nach einem der Ansprüche 30 oder 31, wobei die Empfängereinheit zumindest einen Eingang, eine Verarbeitungseinheit und zumindest einen Ausgang aufweist, und die Verarbeitungseinheit in Reihenschaltung ein Mittel zur Trennung und Transformation der Signalkomponenten und zu deren Überführung in stehende Zwischenfrequenzen, ein Mittel zur Trennung oder Unterdrückung von Störanteilen und ein Mittel zur Parameteranalyse beinhaltet.

30. System nach Anspruch 29, bei dem das Mittel zur Trennung und Transformation zumindest einen Multiplikator aufweist, mittels dessen eine paarweise Multiplikation jeder der zumindest einen Informationskomponente (I1; I2; ... ; IN) mit der Bezugskomponente (BK) erfolgt, wobei die Produkte Spektren von stehenden Zwischenfrequenzen ausbilden, aus denen das nachgeschaltete Mittel zur Unterdrückung von Störanteilen, das zumindest eine Filtereinheit aufweist, die gewünschten Signalanteile herausfiltert, welche dann an das nachgeschaltete Mittel zur Parameteranalyse weitergeleitet werden.

31. System nach einem der Ansprüche 29 bis 30, wobei das Mittel zur Trennung der Signalkomponente zudem eine Filtereinheit mit Steuermodul aufweist, die zumindest zwei Filterelemente in Parallelschaltung beinhaltet.

32. System nach Anspruch 29 oder 31, bei dem das Mittel zur Trennung und Transformation zumindest einen Multiplikator und zumindest ein Mittel zur Bereitstellung von Hilfsfrequenzen aufweist, über die die Bezugs- und Informationskomponenten separat voneinander in Zwischenfrequenzen überführt werden, welchem dann ein zumindest eine Filtereinheit nachgeschaltet ist, mittels derer aus den jeweiligen Spektren der stehenden Zwischenfrequenzen die gewünschten Signalanteile herausgefiltert werden und dann an das nachgeschaltete Mittel zur Parameteranalyse weitergeleitet werden.

33. System nach einem der Ansprüche 27 bis 32, wobei das Mittel zur Frequenztransformation ferner zumindest einen Wandler zum Doppler-Abgleich aufweist.

34. System nach einem der Ansprüche 27 bis 33, wobei das Mittel zur Unterdrückung von Störanteilen zusätzliche steuerbare Filter aufweist.

35. System nach einem der Ansprüche 27 bis 34, bei dem das. Mittel zur Parameteranalyse zumindest einen Multiplikator zur paarweisen Verarbeitung von jeweils einer informationstragenden Signalkomponente mit zumindest einem Referenzsignal aufweist, welches entweder systemintern oder durch die Bezugskomponente bereitgestellt wird, und ein Analysemodul aufweist.

**36.** System nach einem der Ansprüche 27 bis 35, welches zusätzlich ein Mittel zum Tunen aufweist, welches dem Mittel zur Frequenztransformation nachgeschaltet und vorzugsweise dem Mittel zur Parameteranalyse vorgeschaltet ist, ein Modul zur Analyse von Frequenzspektren und eine Auswertungseinheit aufweist und mit dem Mittel zur Unterdrückung von Störanteilen verbunden ist.

**37.** System einem der Ansprüche 27 bis 36, welches zusätzlich ein Modul zur Doppler-Analyse aufweist, welches mit zumindest einem der Generatoren von Hilfsfrequenzen und/oder mit einem weiteren Auswertungsmodul zur Bestimmung der Geschwindigkeit der Abstandsänderung zwischen Sendereinheit und Empfängereinheit verbunden ist.

**38.** Sendeeinheit zum Senden von Informationen, die zur Ausführung eines Verfahrens mit den Schritten gemäß einem der Ansprüche 1 bis 26 eingerichtet ist, wobei die Sendeeinheit ein Mittel zum Erzeugen einer Bezugskomponente (BK) und zumindest einer Ihformationskomponente (I1; I2; ... ; IN) aufweist, um Frequenzveränderungen zu generieren und ein Bitmuster bereitzustellen,
**dadurch gekennzeichnet, dass**
die Sendeeinheit zur Generation von zeitlich kontinuierlichen Frequenzveränderungen eingerichtet ist.

**Claims**

**1.** Method for transmitting information, in which at least one information signal (IS) is generated comprising a reference component (BK) and at least one information component (I1; I2; ....; IN),

- the reference component having a frequency change during transmission, and
- the reference component (BK) and the information component (I1; I2; ....; IN) respectively forming discrete states to provide a bit pattern,

**characterised in that**

- the frequency change is continuous in time.

**2.** Method according to claim 1, in which both the at least one reference component and the at least one information component have a temporally continuous frequency change during transmission and a defined frequency spacing is fixed between the reference and information components.

**3.** Method according to claim 2, in which the frequency spacing is variable in a temporally constant or time-proportional manner.

**4.** Method according to one of claims 1 to 3, in which the frequency of at least one component continuously increases in a transmission interval.

**5.** Method according to one of claims 1 to 4, in which the frequency of at least one component continuously decreases in a transmission interval.

**6.** Method according to one of claims 1 to 5, in which the ranges in which the frequencies are varied, i.e. the frequency bands of two or more components overlap.

**7.** Method according to one of claims 1 to 6, in which at least one of the components reference component (BK) or information component (I1; I2; ...; IN) lies in a separate frequency band.

**8.** Method according to one of claims 1 to 7, in which the bit pattern is fixed by varying the frequency, the amplitude of the phase angle, or the dynamic phase characteristic in a given time pulse.

**9.** Method according to one of claims 1 to 8, in which the bit pattern alters within a time pulse.

**10.** Method according to one of claims 1 to 9, in which the number of information components (I1; I2; ...; IN) alters in dependence on the transmission path.

11. Method according to one of claims 1 to 10, in which the reference component (BK) is used as an additional information component (IN+1).

12. Method according to one of claims 1 to 11, in which the reference component (BK) and the at least one information component (I1; I2; ...; IN) are in the form of a sound wave or an electromagnetic wave.

13. Method according to one of claims 1 to 12, in which, for processing the information signal, after reception the reference component (BK) is separated from the at least one information component (I1; I2; ...; IN).

14. Method according to one of claims 1 to 13, in which the reference component (BK) and an information component (I1; I2; ...; IN) are processed in pairs.

15. Method according to one of claims 13 or 14, in which the information components and the reference component or the reference components and information components processed in pairs are transferred into standing intermediate frequencies (Z'1; Z'2; ...; Z'N+X).

16. Method according to claim 15, in which the information components and the reference component or the reference components and information components processed in pairs are transferred by multiplication with auxiliary frequencies (H1; H2; ...; H+X).

17. Method according to one of claims 1 to 16, in which, in conjunction with a proportional alteration of the frequency channels, standing intermediate frequencies are generated by the paired processing of the signal received in the current time pulse with the received signal of a preceding time pulse.

18. Method according to claim 17, in which the paired processing includes a multiplication.

19. Method according to one of claims 17 or 18, in which an information component is selected from the standing intermediate frequencies (Z'1; Z'2; ...; Z'N+X) as a signal component and relevant information parameters for information coding are determined from the signal component.

20. Method according to one of claims 13 to 18, in which channel tuning is inserted at specific intervals of time.

21. Method according to one of claims 14 to 19, in which there is continuous identification of the respectively most favourable received components or an updating of filter settings with the aid of an appropriate analysis of the spectra of the standing intermediate frequencies.

22. Method according to claim 16, in which transmission-related Doppler frequency shifts are determined and taken into account in the generation of the auxiliary frequencies.

23. Method according to one of claims 13 to 22, in which the paired processing takes place on the basis of internally generated components having the respectively appropriate frequency characteristic.

24. Method according to claims 13 to 23, in which in each case

   a) the reference component BK is converted into a transformed reference component BK' and the at least one information component I1; I2; ...; IN into a transformed information component I1'; I2'; ...; IN'; and
   b) the signal parameters relevant for the information coding are determined on the basis of the projection of I1'; I2'; ...; IN' onto the sine and cosine components of the respective BK'.

25. Method according to claim 24, in which the reference component is so converted by appropriate transformation into a reference component (RF) which is Doppler-identical with the respective information component to be processed that the multiplication of the two components produces a frequency-stable signal.

26. Method according to one of claims 24 or 25, in which

   a) the transformed information component (I1'; I2'; ...; IN') is multiplied by the reference component (RF) to generate a first value (CQ);

b) the transformed information component (I1'; I2'; ...; IN') is multiplied by the temporally derived reference component (RF) to generate a second value (SQ);

c) a relationship is formed between the first and the second values in order to obtain a final value which is temporally invariant and only depends on temporally invariant information parameters.

27. System for transmitting information which is arranged to carry out a method having the steps as per one of claims 1 to 26 and comprises a transmitter unit and a receiver unit between which an information signal (IS) is communicated,

- the transmitter unit having a means for generating a reference component (BK) and at least one information component (I1; I2; ...; IN), in order to provide a bit pattern, and
- the receiver unit having a means for detecting the information signal (IS) comprising at least one information component (I1; I2; ...; IN) and a reference component (BK), in which signal the reference component has a frequency change,

**characterised in that**

- the transmitter unit is arranged to generate temporally continuous frequency changes of the reference component.

28. System according to claim 27, in which the transmitter unit has:

- at least one generator for providing the reference component (BK) and at least one information component;
- a first control module which is connected to the generator and fixes the frequency pattern;
- an encoder or a modulator connected to the control module for converting the information with respect to signal technology, and
- a mixing unit which is connected downstream of the generator and the encoder or the modulator.

29. System according to one of claims 30 or 31 in which the receiver unit has at least one input, a processing unit and at least one output, and the processing unit contains in series connection a means for separating and transforming the signal components and transferring them into standing intermediate frequencies, a means for separating or suppressing spurious components and a means for analysing parameters.

30. System according to claim 29, in which the means for separating and transforming has at least one multiplier, by means of which paired multiplication of each of the at least one information components (I1; I2; ... ; IN) with the reference component (BK) takes place, the products forming spectra of standing intermediate frequencies from which the downstream means for suppressing spurious components, which has at least one filter unit, filters out the desired signal components which are then passed onto the downstream means for parameter analysis.

31. System according to one of claims 29 to 30, in which the means for separating the signal component also has a filter unit with a control module, the filter unit containing at least two filter elements connected in parallel.

32. System according to claim 29 or 31, in which the means for separating and transforming has at least one multiplier and at least one means for providing auxiliary frequencies via which the reference and information components are transferred into intermediate frequencies separately from one another and downstream of which at least one filter unit is connected, by means of which the desired signal components are filtered out of the respective spectra of the standing intermediate frequencies and then passed onto the downstream means for parameter analysis.

33. System according to one of claims 27 to 32, in which the means for frequency transformation has in addition at least one transformer for Doppler tuning.

34. System according to one of claims 27 to 33, in which the means for suppressing spurious components has additional controllable filters.

35. System according to one of claims 27 to 34, in which the means for parameter analysis has at least one multiplier for the paired processing of respectively one information-carrying signal component with at least one reference signal, which is either system-inherent or provided by the reference component, and an analysis module.

**36.** System according to one of claims 27 to 35, which has in addition a tuning means, which is connected downstream of the means for frequency transformation and preferably upstream of the means for parameter analysis, a module for analysing frequency spectra and an evaluation unit and is connected to the means for suppressing spurious components.

**37.** System according to one of claims 27 to 36, which has in addition a module for Doppler analysis which is connected to at least one of the generators of auxiliary frequencies and/or to a further evaluation module for determining the rate of the change in spacing between transmitter unit and receiver unit.

**38.** Transmitting unit for transmitting information, which is arranged to carry out a method having the steps according to one of claims 1 to 26, the transmitting unit having a means for generating a reference component (BK) and at least one information component (I1; I2; ... ; IN) in order to generate frequency changes and provide a bit pattern, **characterised in that**
the transmitting unit is arranged to generate temporally continuous frequency changes.

**Revendications**

**1.** Procédé permettant de transmettre des informations, dans lequel au moins un signal d'informations (IS) composé d'un composant de référence (BK) et d'au moins un composant d'informations (I1 ; I2 ; ...; IN), est produit, sachant que :

- le composant de référence présente pendant la transmission un changement de fréquence, et
- le composant de référence (BK) et le composant d'informations (I1 ; I2 ; .... ; IN) forment respectivement des états discrets pour la fourniture d'un modèle binaire, **caractérisé en ce que**
- le changement de fréquence est continu dans le temps.

**2.** Procédé selon la revendication 1, dans lequel non seulement le au moins un composant de référence, mais aussi le au moins un composant d'informations présentent pendant la transmission un changement de fréquence continu dans le temps, et un écart de fréquence défini est déterminé entre les composants de référence et les composants d'informations.

**3.** Procédé selon la revendication 2, dans lequel l'écart de fréquence est constant dans le temps, ou est modifiable de façon proportionnelle au temps.

**4.** Procédé selon une des revendications 1 à 3, dans lequel la fréquence d'au moins un composant augmente de façon continue dans un intervalle de transmission.

**5.** Procédé selon une des revendications 1 à 4, dans lequel la fréquence d'au moins un composant décroît de façon continue dans un intervalle de transmission.

**6.** Procédé selon une des revendications 1 à 5, dans lequel se chevauchent les zones dans lesquelles les fréquences sont modifiées, c'est-à-dire les bandes de fréquence de deux ou plusieurs composants.

**7.** Procédé selon une des revendications 1 à 6, dans lequel au moins un des composants, comme le composant de référence (BK) ou le composant d'informations (I1 ; I2 ; ... ; IN), se situe dans une bande de fréquence séparée.

**8.** Procédé selon une des revendications 1 à 7, dans lequel le modèle binaire est déterminé par la variation de la fréquence, de l'amplitude de l'angle de phase, ou de la caractéristique de phase dynamique dans un cycle temporel donné.

**9.** Procédé selon une des revendications 1 à 8, dans lequel le modèle binaire se modifie au sein d'un cycle temporel.

**10.** Procédé selon une des revendications 1 à 9, dans lequel le nombre des composants d'informations (II ; I2 ; ...; IN) se modifie en fonction de la voie de transmission.

**11.** Procédé selon une des revendications 1 à 10, dans lequel le composant de référence (BK) est utilisé en tant que composant d'informations (IN+1) supplémentaire.

**12.** Procédé selon une des revendications 1 à 11, dans lequel le composant de référence (BK) et le au moins un composant d'informations (I1 ;I2 ; .... ; IN) sont configurés comme onde sonore ou comme onde électromagnétique.

**13.** Procédé selon une des revendications 1 à 12, dans lequel les composants de référence (BK) sont séparés d'au moins un composant d'informations (I1 ;I2 ; ...; IN) après réception pour le traitement du signal d'informations.

**14.** Procédé selon une des revendications 1 à 13, dans lequel a lieu un traitement jumelé du composant de référence (BK) et d'un composant d'informations (I1 ; I2 ; ...; IN).

**15.** Procédé selon une des revendications 13 ou 14, dans lequel les composants d'informations et les composants de référence, ou les composants de référence et les composants d'informations traités par paire sont transférés dans des fréquences intermédiaires stationnaires (Z'1 ; Z'2 ; .... ; Z'N+X).

**16.** Procédé selon la revendication 15, dans lequel les composants d'informations et les composants de référence, ou les composants de référence et les composants d'informations traités par paire sont transmis par la multiplication avec des fréquences auxiliaires (H1 ; H2 ; .... ; H+X).

**17.** Procédé selon une des revendications 1 à 16, dans lequel, en relation avec une modification proportionnelle des canaux de fréquence, des fréquences intermédiaires stationnaires sont produites par le traitement jumelé du signal reçu dans le cycle temporel actuel avec le signal de réception d'un cycle passé.

**18.** Procédé selon la revendication 17, dans lequel le traitement jumelé comprend une multiplication.

**19.** Procédé selon une des revendications 17 ou 18, dans lequel un composant d'informations est sélectionné en tant que composant de signal à partir des fréquences intermédiaires stationnaires (Z'1 ; Z'2 ; ...; Z'N+X), et des paramètres d'informations pertinents pour un codage d'informations sont déterminés à partir des composants de signal.

**20.** Procédé selon une des revendications 13 à 18, dans lequel une syntonisation de canal est insérée à des intervalles de temps déterminés.

**21.** Procédé selon une des revendications 14 à 19, dans lequel une identification des composants respectivement les plus favorables ou une actualisation des réglages de filtres ont lieu en continu au moyen d'une analyse appropriée des spectres des fréquences intermédiaires stationnaires.

**22.** Procédé selon la revendication 16, dans lequel des déplacements de fréquences Doppler liés à la transmission sont déterminés, et sont pris en compte lors de la production des fréquences auxiliaires.

**23.** Procédé selon une des revendications 13 à 22, dans lequel le traitement jumelé a lieu au moyen de composants générés en interne avec la caractéristique de fréquence respectivement adaptée.

**24.** Procédé selon la revendication 13 à 23, dans lequel

a) le composant de référence BK est transféré dans un composant de référence BK' transformé, et le au moins un composant d'informations I1 ; I2 ; ... ; IN est transféré dans un composant d'informations transformé I1' ; I2' ; ... ; IN' ; et
b) les paramètres de signal pertinents pour le codage des informations sont déterminés au moyen de la projection de I1' ; I2' ; ... ; IN' sur les composants sinus et cosinus de chaque BK'.

**25.** Procédé selon la revendication 24, dans lequel le composant de référence est converti par la transformation appropriée en un composant de référence (RF) identique au composant d'informations Doppler devant être traité respectivement, de telle sorte que la multiplication des deux composants produise un signal stable en fréquence.

**26.** Procédé selon une des revendications 24 ou 25, dans lequel

a) le composant d'informations transformé (I1' ; I2' ; ... ; IN') est multiplié avec le composant de référence (RF) pour la production d'une première valeur (CQ) ;
b) le composant d'informations transformé (I1' ; I2' ; ... ; IN') est multiplié avec le composant de référence (RF) dérivé temporellement pour la production d'une seconde valeur (SQ) ; et
c) un rapport est formé entre la première valeur et la seconde valeur, pour obtenir une valeur finale invariante dans le temps qui dépend uniquement de paramètres d'informations invariants dans le temps.

**27.** Système de transmission d'informations qui est conçu pour l'exécution d'un procédé comprenant les étapes selon une des revendications 1 à 26, et comprend une unité d'émission et une unité de réception entre lesquelles est transmis un signal d'informations (IS), moyennant quoi

- l'unité d'émission comprend un moyen de production d'un composant de référence (BK) et au moins un composant d'informations (I1 ; I2 ; ... ; IN), pour fournir des modèles binaires, et
- l'unité de réception contient un moyen de saisie du signal d'informations (IS) formé d'au moins un composant d'informations (I1 ; I2 ; ... ; IN) et d'un composant de référence (BK),

  dans lequel le composant de référence comprend un changement de fréquence, **caractérisé en ce que**

- l'unité d'émission est conçue de façon à générer de façon continue dans le temps des changements de fréquence des composants de référence.

**28.** Système selon la revendication 27, sachant que l'unité d'émission comprend :

- au moins un générateur de fourniture du composant de référence (BK) et au moins un composant d'informations ;
- un premier module de commande qui est relié au générateur et détermine le tracé de fréquence ;
- un codeur ou un modulateur relié au module de commande pour la conversion technique des signaux d'informations, et
- une unité de mélange qui est intercalée à la suite du générateur et du codeur et/ou du modulateur.

**29.** Système selon une des revendications 30 ou 31, moyennant quoi l'unité de réception comprend au moins une entrée, une unité de traitement et au moins une sortie, et l'unité de traitement contient dans un montage en série un moyen de séparation et de transformation des composants de signaux, et leur transfert dans des fréquences intermédiaires stationnaires, un moyen de séparation ou de suppression des composantes perturbatrices et un moyen d'analyse des paramètres.

**30.** Système selon la revendication 29, dans lequel le moyen de séparation et de transformation comprend au moins un multiplicateur, au moyen duquel a lieu une multiplication jumelée de chacun du au moins un composant d'informations (I1 ; I2 ; ... ; IN) avec le composant de référence (BK), sachant que les produits forment des spectres des fréquences intermédiaires stationnaires, à partir desquels les moyens intercalés à la suite pour la suppression des composantes perturbatrices comprenant au moins une unité de filtre filtrent les composantes de signaux souhaitées qui sont transmises au moyen intercalé à la suite pour l'analyse des paramètres.

**31.** Système selon une des revendications 29 à 30, moyennant quoi le moyen de séparation des composants de signaux comprend de plus une unité de filtre avec module de commande, laquelle contient au moins deux éléments de filtre dans un montage en parallèle.

**32.** Système selon la revendication 29 ou 31, dans lequel le moyen de séparation et de transformation comprend au moins un multiplicateur et au moins un moyen de fourniture des fréquences auxiliaires par lesquels sont transférés les composants de référence et les composants d'informations séparément les uns des autres dans des fréquences intermédiaires, à la suite duquel est intercalée au moins une unité de filtre, au moyen de laquelle sont filtrées les composantes de signaux souhaitées à partir des spectres respectifs des fréquences intermédiaires stationnaires, puis sont transmises au moyen intercalé à la suite pour l'analyse des paramètres.

**33.** Système selon une des revendications 27 à 32, moyennant quoi le moyen de transformation de fréquence comprend de plus au moins un transformateur pour l'égalisation Doppler.

**34.** Système selon une des revendications 27 à 33, moyennant quoi le moyen de suppression des composantes perturbatrices comprend des filtres supplémentaires pouvant être commandés.

**35.** Système selon une des revendications 27 à 34, dans lequel le moyen d'analyse des paramètres comprend au moins un multiplicateur pour le traitement jumelé d'un composant de signal respectif supportant des informations avec au moins un signal de référence, qui est fourni soit de façon interne au système soit par les composants de référence, et comprend un module d'analyse.

36. Système selon une des revendications 27 à 35, qui comprend en plus un moyen de syntonisation, lequel est intercalé à la suite du moyen de transformation de la fréquence, et est placé de préférence en amont du moyen d'analyse des paramètres, comprend un module d'analyse des spectres de fréquences et comprend une unité d'évaluation, et est relié au moyen de suppression des composantes perturbatrices.

37. Système selon une des revendications 27 à 36, qui comprend en sus un module d'analyse Doppler qui est relié à au moins un des générateurs de fréquences auxiliaires et/ou à un autre module d'évaluation pour la détermination de la vitesse du changement de distance entre l'unité d'émission et l'unité de réception.

38. Unité d'émission pour l'émission d'informations qui est conçue pour l'exécution d'un procédé comprenant les étapes selon une des revendications 1 à 26, moyennant quoi l'unité d'émission comprend un moyen de production d'un composant de référence (BK) et au moins un composant d'informations (I1 ; I2 ; ... ; IN) pour générer des changements de fréquence et fournir un modèle binaire,

   **caractérisée en ce que**

   l'unité d'émission est mise en place pour la génération de changements de fréquence continus dans le temps.

Fig. 1

IS

## Fig. 2a

I | II | III

GT + HK2 + HK3      GT      GT + HK1

## Fig. 2b

I4

I3

I2

I1

BK

| 0 | 0 | 0 | 0 | 1 | 0 | 1 | 0 | 1 | 0 | 1 | 0 | 1 | 0 | 0 | 1 | 0 | 0 | 1 | 1 | 1 | 0 | 0 | 0 |
| 0 | 0 | 1 | 1 | 1 | 1 | 1 | 1 | 0 | 1 | 0 | 1 | 0 | 1 | 1 | 0 | 1 | 1 | 1 | 1 | 0 | 1 | 0 | 0 |
| 1 | 1 | 0 | 0 | 1 | 1 | 0 | 1 | 0 | 1 | 0 | 1 | 0 | 1 | 1 | 1 | 1 | 1 | 1 | 1 | 1 | 1 | 1 | 1 |
| 0 | 0 | 0 | 0 | 1 | 0 | 0 | 0 | 0 | 0 | 1 | 0 | 0 | 1 | 0 | 1 | 0 | 0 | 1 | 1 | 0 | 1 | 0 | 0 | 0 |

| " | | D | | o | | l | | p | | h | | i | | n | | C | | o | | m | | " |

## Fig. 3

EP 1 105 986 B1

Fig. 4

Fig. 5

Fig. 6

$e^{nj\omega t}$ ——————

$-e^{nj\omega t}$ —··—··—··

$je^{nj\omega t}$ ············

$-je^{nj\omega t}$ — — — —

$0$ ··················

f

D  o  l  p  h  i  n

t

Fig. 7

EP 1 105 986 B1

37

Fig. 8a

Fig. 8b

Fig. 9a

Fig. 9b

Fig. 10

Informationsunit

Codierer — 3

Symbol = (x1 | x2 | x3 · · · xn)    x := {1, 0}

7    5    5    5    5

| Steuer-modul | Generator GT a0, f0, φ0 | Generator K1 a1, f1, φ1 | Generator K2 a2, f2, φ2 | · · · | Generator Kn an, fn, φn |

Wellenkomponenten

Mischer (Wellenformer) — 9

Leistungsverstärker — 11

Wandler

W1
W2
⋮
Wn

Akustisches Signal

Fig. 11

Informationsunit

Codierer

Symbol = (x1| x2 |x3|   ...   xn)          x := {1, 0}

Steuermodul

Sono-Former (Polinom-Koeff)

AM-Former (MF,Hz,Dry-Out,dB)

| Generator GT $a0, f0, \varphi 0$ | Generator K1 $a1, f1, \varphi 1$ | Generator K2 $a2, f2, \varphi 2$ | ... | Generator Kn $an, fn, \varphi n$ |

13

| Modulator K1 ( MF1,Hz, Dry-Out1,dB) | Modulator K2 ( MF2,Hz, Dry-Out2,dB) | ... | Modulator Kn ( MF3,Hz, Dry-Out3,dB) |

Wellenkomponenten

Mischer

Leistungsverstärker

Wandler

W1
W2
Wn

Akustisches Signal

Fig. 12

Akustisches Signal

Wandler

W1
W2
Wn

Verstärker — 23

Low-Pass-Filter (Grundton) — 25

Grundton-detektor (f0, Psd) — 27

Steuer-modul — 29

Gesteuerte Filter K1 — 31

Gesteuerter Schwellwert-schalter K1 — 33

Gesteuerte Filter K2 — 31

Gesteuerter Schwellwert-schalter K2 — 33

Gesteuerte Filter Kn — 31

Gesteuerter Schwellwert-schalter Kn — 33

Decoder — 35

Informationsunit

Fig. 13

Fig. 14

Fig. 15

Fig .16

Fig. 17

Fig. 18

Fig. 19

Fig. 20

Fig. 21

Fig. 22

|                | VDK | KR1 | KR2 | Kompl1 | Kompl2 | Doppler-Best. |
|----------------|-----|-----|-----|--------|--------|---------------|
|                | B   I | B   I | B   I | B   I | B   I | K |

B - Bezugskomponente,  I - Informationskomponente,  K - Signalkomponente (allgemein)

[pDA] - paarweiser Doppler-Abgleich,  ⊗ - Multiplikation, H - Hilfsfrequenz,

⊡ - Filterstufe (scharf),  ◇ - paarweise Verarbeitung, Ⓗ - Ausgabe-Parameter, z.B Phasenwinkel

⊖ - Doppler-Analyse,  D=V/c - Doppler-Koeffizient.

Fig. 23

EP 1 105 986 B1

Fig. 24

Fig. 25